(19) Europäisches Patentamt

European Patent Office

Office européen des brevets

(11) **EP 1 239 608 B1**

(12) **EUROPÄISCHE PATENTSCHRIFT**

(45) Veröffentlichungstag und Bekanntmachung des Hinweises auf die Patenterteilung:
**19.04.2006 Patentblatt 2006/16**

(51) Int Cl.:
***H04B 7/08*** *(2006.01)*

(21) Anmeldenummer: **02003775.0**

(22) Anmeldetag: **20.02.2002**

(54) **Diversity-Anlage zum Empfang digitaler terrestrischer und/oder Satelliten-Funksignale für Fahrzeuge**

Diversity system for receipt of digital terrestrial and/or satellite radio signals for cars

Système en diversité de reception des signaux numeriques terrestre et/ou satellite pour voitures

(84) Benannte Vertragsstaaten:
**AT BE CH CY DE DK ES FI FR GB GR IE IT LI LU MC NL PT SE TR**

(30) Priorität: **02.03.2001 DE 10110154**
**13.09.2001 DE 10145202**
**15.02.2002 DE 10206385**

(43) Veröffentlichungstag der Anmeldung:
**11.09.2002 Patentblatt 2002/37**

(73) Patentinhaber: **FUBA Automotive GmbH & Co. KG**
**31162 Bad Salzdetfurth (DE)**

(72) Erfinder:
• **Lindenmeier, Heinz**
**82152 Planegg (DE)**
• **Hopf, Jochen**
**85540 Haar (DE)**
• **Reiter, Leopold**
**82205 Gilching (DE)**

(56) Entgegenhaltungen:
**EP-A- 0 998 058 EP-A- 1 041 736**
**DE-A- 4 403 612 GB-A- 2 342 820**

EP 1 239 608 B1

**Beschreibung**

Die Erfindung betrifft eine Diversity-Empfangsanlage für digital modulierte terrestrische und /oder Satelliten-Funksignale im Frequenzbereich oberhalb 1 GHz für Fahrzeuge, bestehend aus einer Antennenanordnung, deren Empfangssignal einem Funkempfänger zugeführt ist. Für die Funkübertragung von digitalen Signalen im Frequenzbereich oberhalb 1 GHz kommen insbesondere das OFDM-Verfahren (orthogonal frequency division multiplex) und das MPSK-Verfahren (Phase-Shift-Keying mit M Phasenzuständen) zur Anwendung. Hierbei wird für den Downlink einer Satellitenfunkverbindung aus energetischen Gründen häufig die QPSK-Modulation (4 Phasenzustände) und für die terrestrische Kommunikation die OFDM-Modulation gewählt, weil diese eine kleinere Empfindlichkeit in Bezug auf Laufzeitdifferenzen zwischen sich überlagernden Signalen aufgrund der Mehrwegeausbreitung aufweist. Dies trifft z.B. für das Satellitenradiosystem SDARS zu, das für den flächendeckenden mobilen Radioempfang in USA konzipiert ist und bei dem zusätzlich zur Abstrahlung von 2 Satelliten in Ballungsgebieten eine terrestrische Funkausseadung erfolgt.

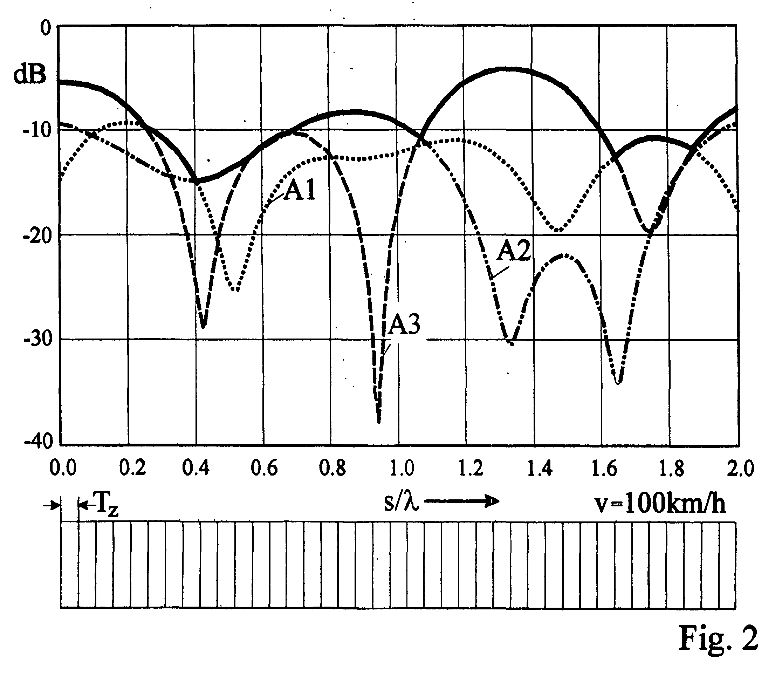

Die infolge der Mehrwegeausbreitung beim mobilen Empfang auftretenden Übertragungsstörungen werden seit Jahren für die Übertragung analog übertragener Signale, wie z.B. beim FM-Rundfunk, erfolgreich mit Mehrantennen-Systemen drastisch reduziert Solche Systeme sind bekannt aus P3618452.7, P4034548.3, P3926336.3. Weiterhin ist aus EP-A-0 998 058 ein Scanning-AntennenDiversitysystem für analog frequenzmodulierte Rundfunksignale (z. B. UKW-Empfang oder Fernsehtonempfang) bei welchem - wie bei den für analoge frequenzmodulierte Rundfunksignale gestalteten Scanning-Antennen-Diversitysystemen in den vorgenannten Druckschriften - Signalverzerrungen mit Hilfe eines Diversityprozessors mit Störungsdetektor zur Ermittlung der modulationsbedingten, mit Frequenzstörhubspitzen korrelierten Pegeleinbrüche angezeigt werden und der Diversityprozessor bei Auftreten einer Störung ein Weiterschalten auf die weiteren Antennensignale bewirkt. Diese Systeme haben den Nachteil, daß die dort eingesetzten Diversityprozessoren mit Störungsdetektor für digital modulierte Signale oberhalb von 1GHz für Fahrzeuge bei üblichen Fahrgeschwindigkeiten nicht geeignet sind. Aufgrund der Struktur von OFDM- bzw. MPSK-Signalen können solche Systeme bei digitaler Modulation nicht angewandt werden. Die vorliegende Erfindung geht aus von der EP1041736A2. Hierin ist ein Diversity-Empfänger für Burst-0FDM-Signalübertragung beschrieben. Hierin wird als "prior art" in den Figuren und 2 ein Diversity-Empfänger für OFDM Signale beschrieben, in welchem im Zusammenhang mit der Übertragung des OFDM-Bursts Präambel-Signale für die Synchronisation, die Kanalschätzung und die Antennenauswahl nach einem Pegelkriterium, ausserhalb des für die Datenübertragung vorgesehenen Zeitschlitzes, gesendet werden. Dieses Verfahren birgt den Nachteil, dass der mit 11 in Fig. 2 gekennzeichnete Zeitschlitz für das Präambel-Signal zur Antennenauswahl im gesendeten Burst-Signal vorgesehen sein muss und eine Aktualisierung des günstigsten Antennensignals ausschließlich abhängig vom Auftreten des Burst-Signals erfolgen kann und nicht angepasst an die aus der Fahrbewegung im

Mehrwege-Szenario sich ergebende Notwendigkeit der Aktualisierung erfolgen kann. Dies ist insbesondere bei Trägerfrequenzen oberhalb von 1 GHz von Bedeutung. Sieht man zur sicheren Vermeidung tiefer Pegeleinbrüche etwa zehn Aktualisierungsvorgänge auf eine halbe Wellenlänge zurückgelegter Fahrstrecke bei 1 GHz vor, so ist die Aktualisierung bei einer Geschwindigkeit von 150 km/h in Zeitabständen von 350μsec zu wiederholen. Umgekehrt würde dies für COFDM-Signale nach dem DAB-Vetfahren (digital-audio-broadcasting) im L-Band (1,5GHz) eine inakzeptable Forderung der Geschwindigkeitsbegrenzung auf 0,5 km/h bedeuten.

Ferner führt die Definition eines gesonderten Zeitschlitzes für ein Präambel-Signal zur Antennenauswahl zu einer Reduzierung der effektiv übertragbaren Datenrate. Die in der vorgenannten EP1041736A2 beschriebene Erfindung beruht auf der Abkehr von der ausschliesslichen Signal-Pegelbewertung im Hinblick auf die Antennenwahl, sondern sieht als Auswahlkriterium für die bei der nachfolgenden Datenidentifikation ausgewählten Antenne zusätzliche aus einem definierten bekannten Burst-Signal ableitbare Signalfehler, wie z.B. Laufzeit- und Phaseneffekte vor. Die Aktualisierung der Antennenauswahl findet jedoch auch hier zwangsweise nur im Zusammenhang mit dem gesendeten Burst-Signal und damit in zu großen Zeitabständen statt.

Der Erfindung liegt deshalb die Aufgabe zugrunde, eine Diversity-Empfangsanlage nach dem Oberbegriff des Hauptanspruchs anzugeben, in welcher die Aktualisierung des Empfangssignals im Hinblick auf die Auswahl eines günstigeren Empfangssignals mit möglichst kleiner Bitfehlerrate auch bei schneller Fahrt in hinreichend kurzen Zeitabständen und zeitlich simultan mit der Identifikation des Datenstroms ermöglicht ist und welche unter der Voraussetzung einer aus fahrzeugtechnischer Sicht anwenderfreundlichen Antenne bei verfügbarem Link-Budget der Funkverbindung die Bitfehlerrate möglichst klein hält.

Diese Aufgabe wird bei einer Diversity-Empfangsanlage nach dem Oberbegriff des Hauptanspruchs durch die kennzeichnenden Merkmale des Hauptanspruchs und die in den weiteren Ansprüchen vorgeschlagenen Maßnahmen gelöst.

Mit diesem Diversity-Verfahren ist der Vorteil verbunden, dass hinsichtlich der gesendeten Signale keine Vorkehrungen für eine empfangsseitige Anwendung der erfindungsgemäßen Diversity-Empfangsanlage vorausgesetzt werden müssen. Das Verfahren ist somit aufgrund dieser Kompatibilität auch als Zusatz zu einem für den Empfang mit einer Einzelantenne konzipierten Funksystem einsetzbar. Ein weiterer Vorteil besteht darin, dass die DiversityFunktion auch mit einem nur minimalen Zusatzaufwand in einem für den Empfang mit einer Einzelantenne vorgesehenen Empfänger erzielt werden kann, denn aus dem Empfänger werden als Mindestanforderung lediglich das ohnehin vorliegende Zwischenfrequenzsignal sowie das ebenso vorhandene Symbol-Taktsignal benötigt. Werden diese beiden Signale am Empfänger zur Verfügung gestellt, dann kann die Empfangsanlage durch Wahl geeigneter Diversity-Antennen und durch eine Diversity-Komponente auch außerhalb des Empfängers zu der leistungsfähigen erfindungsgemäßen Diversity-Empfangsanlage ergänzt werden.

Antennen für Empfangsanlagen für Satellitenfunksignale auf Fahrzeugen sind bekannt aus der DE 40 08 505.8. Diese Antenne besteht aus gekreuzten Horizontaldipolen mit V-fötTnig nach unten geneigten, aus linearen Leiterteilen bestehenden Dipolhälften, die unter einem Winkel von 90 Grad zueinander mechanisch fixiert und am oberen Ende eines auf einer horizontal orientierten leitenden Grundfläche befestigten, linearen, vertikalen Leiters angebracht sind. Zur Erzeugung der bei der Satellitenkommunikation üblicherweise geforderten Zirkularpolarisation werden die beiden V-forniig nach unten geneigten Horizontaldipole elektrisch über ein 90 Grad Phasennetzwerk zusammengeschaltet. Für den Empfang von terrestrisch ausgestrahlten vertikal polarisierten Signalen werden vorzugsweise vertikale Monopolantennen vorgesehen.

Für Satellitenantennen je nach Satellitenkommunikationssystem wird im Elevationswinkelbereich z.B. zwischen 25 bzw. 30 Grad und 60 bzw. 90 Grad ein Antennengewinn von konstant z.B. 2 dBi oder bzw. 3 dBi für zirkulare Polarisation streng gefordert. Diese Forderung besteht für eine auf einer im Zentrum einer ebenen leitenden Grundplatte aufgebauten Antenne. Mit Antennen dieser Bauform lässt sich der im Bereich des Zenitwinkels geforderte Antennengewinn im allgemeinen problemfrei realisieren. Im Gegensatz hierzu kann der geforderte Antennengewinn im Bereich niedriger Elevationswinkel von 20 bis 30 Grad nur schwer und keinesfalls - wie für den mobilen Einsatz gefordert - mit sehr kleiner Bauhöhe der Antennen realisiert werden. Im Speziellen ist es aus physikalischen Gründen auch unmöglich, die 3-dBi-Werte im gesamten Raumwinkelbereich zu überschreiten und damit eine erhöhte Signalqualität zu realisieren.

Es ist weiterhin bekannt zur Erfüllung der Gewinnanforderungen sowohl im Winkelbereich niedriger Elevation als auch bei Steilstrahlung aus linearen Leitem gebogene Antennen zu verwenden. Die heute häufig verwendete Antennenform ist die Quadrifilar-Helix Antenne nach Kilgus (IEEE Transactions on Antennas and Propagation, 1976, S. 238 - 241). Solche Antennen besitzen oft eine Länge von mehreren Wellenlängen und sind nicht als Flachantennen mit niedriger Bauhöhe bekannt. Auch mit einer in der EP 0 952 625 A2 angegebenen Antenne mit niedriger Bauhöhe lassen sich die oben genannten Gewinnwerte im Winkelbereich mit niedriger Elevation nicht erfüllen.

Deshalb wird im SAE Technical Paper 2001-01-1328 mit dem Titel "XM Satellite Radio Technology Fundamentals" von Stellios J. Patsiokas eine Helixantenne für den zusätzlichen Empfang terrestrisch ausgestrahlter Signale mit einer Monopolantenne kombiniert, wodurch sich eine für die Anwendung auf Fahrzeugen nachteilig große Bauform der kombinierten Antenne ergibt.

Ein neben der Bauhöhe zusätzlich vorhandenes Problem ergibt sich mit derartigen Antennen auch aus dem Sachverhalt, dass aufgrund des im Automobilbau geforderten Aufbaus auf der Außenhaut des Fahrzeugs in Verbindung mit der Unmöglichkeit, aus fahrzeugtechnischen Gründen die Antenne auf Dachmitte zu platzieren oder aufgrund der häufig erhobenen Forderung, die Antenne mit der Fahrzeugform zu integrieren, das idealisiert gestaltete Richtdiagramm mit dem vorgeschriebenen Aufbau auf der Platte bei Anbringung auf dem Fahrzeug sehr stark deformiert ist und in der Regel unzulässige Einzüge besitzt. Hierbei sind häufig insbesondere die Bereiche mit niedriger Elevation der Funkwellen betroffen. Auch die Eigenschaft der zirkularen Polarisation der Antenne kann in diesem Winkelbereich vollkommen verloren gehen. Diese Einflüsse resultieren aus den Beugungen und Reflexionen der einfallenden Wellen, welche sich im Frequenzbereich über 1 bis 3 GHz in der Hauptsache an den Fahrzeugkanten und den Diskontinuitäten der Fahrzeugkarosserie, wie z.B. dem Dachrand am Rückfenster, sowie aus Abschattung des Welleneinfalls durch Fahrzeugteile ergeben.

Hinzu kommt, dass sich das mit dem Richtdiagramm bewertete Empfangssignal aufgrund sich überlagernder reflektierter Wellen aufgrund der Fahrzeugbewegung stark ändert und es zu Signalauslöschungen kommt. All diese Effekte können mit einer nach den Vorschriften anhand des Aufbaus auf einer Platte gestalteten und auf dem Fahrzeug montierten Antenne nicht vermieden werden. Die daraus resultierenden unzulässig hohen Bitfehlerraten können zum Abbruch der Funkverbindung führen. Durch Wahl geeigneter Diversity-Einzelantennen A1, A2, A3,... in der Antennenanlage 1 in der erfindungsgemäßen Diversity-Empfangsanlage lassen sich solche Effekte vorteilhaft weitgehend reduzieren.

Ein wesentlicher Vorteil einer Diversity-Empfangsanlage nach der Erfindung besteht somit in dem Sachverhalt, dass die in der Praxis nicht erfüllbare Forderung nach einer einzigen Fahrzeugantenne mit einem Richtdiagramm mit strenger Zirkularpolarisation, wie es z.B. für den idealisierten Aufbau auf der vorgeschriebenen Platte gefordert ist, für ein einzelnes Richtdiagramm der Empfangsanlage nicht gesondert im gesamten Raumwinkelbereich weder für die vom Satelliten noch für die terrestrisch ausgestrahlten Signale eingehalten werden muss. Durch die gesonderte Gestaltung von voneinander unabhängigen sektoralen Richtdiagrammen 9 ist es z.B. möglich, durch Auswahl eines einzelnen Richtdiagramms zu den ausgewählten Zeitpunkten jeweils ein Richtdiagamm zur Verfugung zu stellen, welches in der aktuell geforderten Raumrichtung unter Einschluss der ansonsten nur sehr schwer abdeckbaren Bereiche kleiner Elevationswinkel einen hinreichenden Antennengewinn besitzt.

Die Auffüllung der zum Teil erheblichen Pegeleinbrüche von 10 bis 20 dB über der Fahrstrecke insbesondere im Gebiet der Teilabschattung bzw. der Abschattung des direkt einfallenden Empfangssignals mit Hilfe der erfindungsgemäßen Diversity-Empfangsanlage ist jedoch im Hinblick auf die Erzielung geringer Bitfehlerraten ungleich wirkungsvoller als die akribische Einhaltung eines vorgeschriebenen Richtdiagramms auf einer kreisrunden Platte.

Die Erfindung wird im Folgenden anhand der Figuren näher beschrieben. Es zeigen:

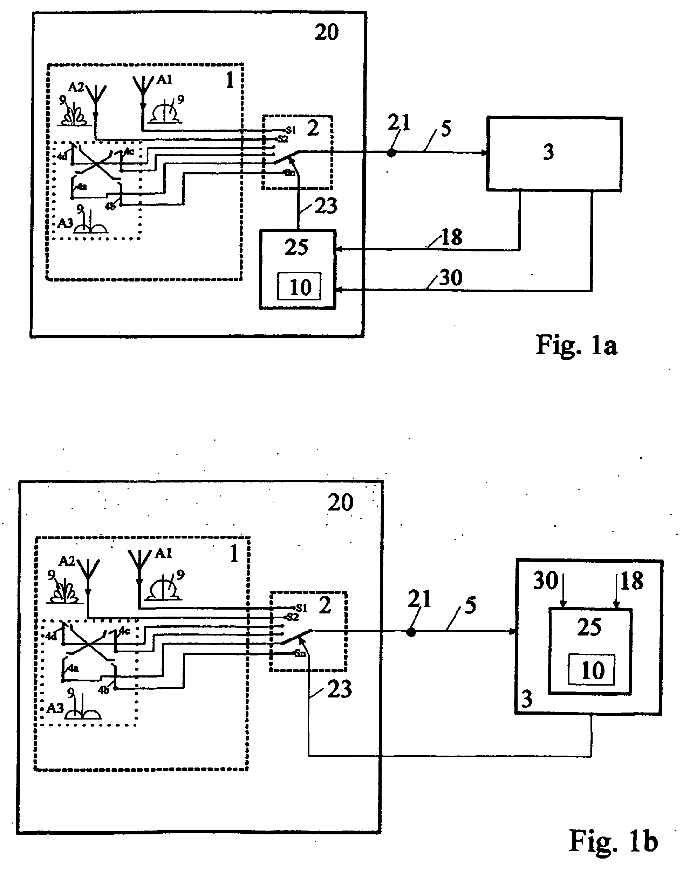

Fig. 1a: Erfindungsgemäße Antennendiversity-Empfangsanlage mit einer Antennenanordnung 20 und einem Empfänger 3, einer logischen Schalteinrichtung 2, einer EmpfangspegelPrüfeinrichtung 25 mit zugeführtem Symboltaktsignal 18 über einen triggerbarem Pulsgenerator und Pegelkomparator 10 zur vergleichenden Feststellung des Empfangspegels 30.

1b: Wie Fig. 1a, jedoch mit im Satellitenfunkempfänger 3 enthaltener Empfangspegel-Prüfeinrichtung 25.

1c: Wie Fig. 1a. jedoch mit einem Empfänger 3 mit getrennten Empfangszweigen für Signale mit QPSK-Modulation (Kennzeichnung mit a) und für Signale mit COFDM-Modulation des HF-Trägers (Kennzeichnung mit b) für den gleichzeitigen und koordinierten Empfang von digital modulierten Satellitenfunksignalen nach dem Q-PSK-Verfahren und digital modulierten von terrestrischen Funkstellen ausgestrahlten Funksignalen nach dem COFDM-Verfahren in benachbarten Hochfrequenzbändern der gleichen HF- Kanalbandbreite B jeweils desselben, aber durch Laufzeit versetzten Signalinhalts.

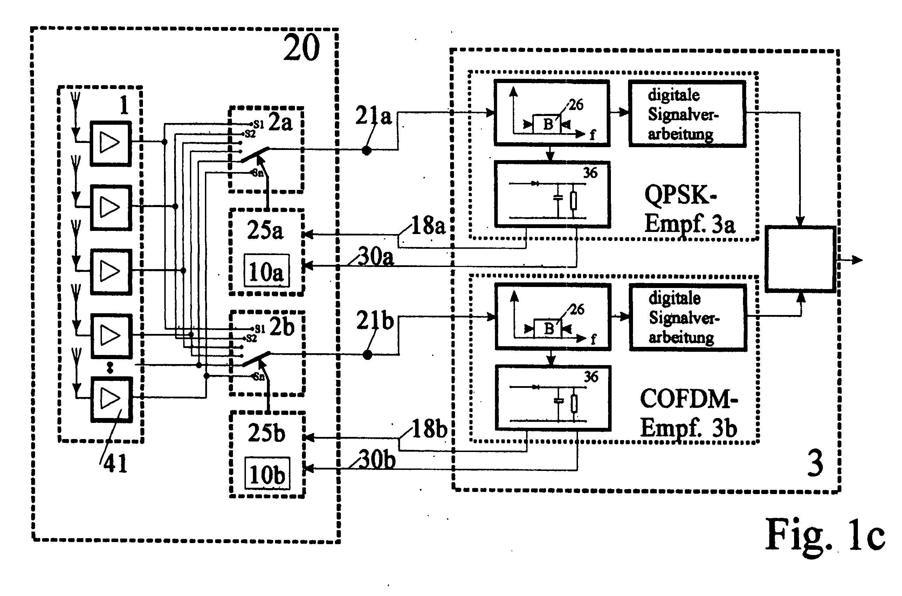

1d: Wie Fig. 1c, jedoch mit einem Empfänger 3 mit einem weiteren Empfangszweig für Signale mit QPSK-Modulation (Kennzeichnung mit a'), welche von einem weiteren Satelliten ausgestrahlt werden, für den gleichzeitigen und koordinierten Empfang mit den vom ersten Satelliten ausgestrahlten Funksignalen und den von terrestrischen Funkstellen ausgestrahlten Funksignalen in benachbarten Hochfrequenzbändern der gleichen HF-Kanalbandbreite B jeweils desselben, aber durch Laufzeit versetzten Signalinhalts.

Fig. 2: Pegelverläufe der Empfangssignale 5 von drei Einzelantennen (A1,A2,A3) über einer Wegstrecke von $2\lambda$ und daraus erfindungsgemäß durch Antennendiversity ausgewähltem maximalem Pegel (oben). Das Zeitraster (unten) stellt einen für eine Fahrgeschwindigkeit von 100 km/h hinreichend kleinen Prüfzyklus-Zeitabstand $T_z$ für die Aktualisierung des günstigsten Empfangssignals 5 für maximalen Pegel während einer zurückgelegten Strecke von $\lambda/20$ dar.

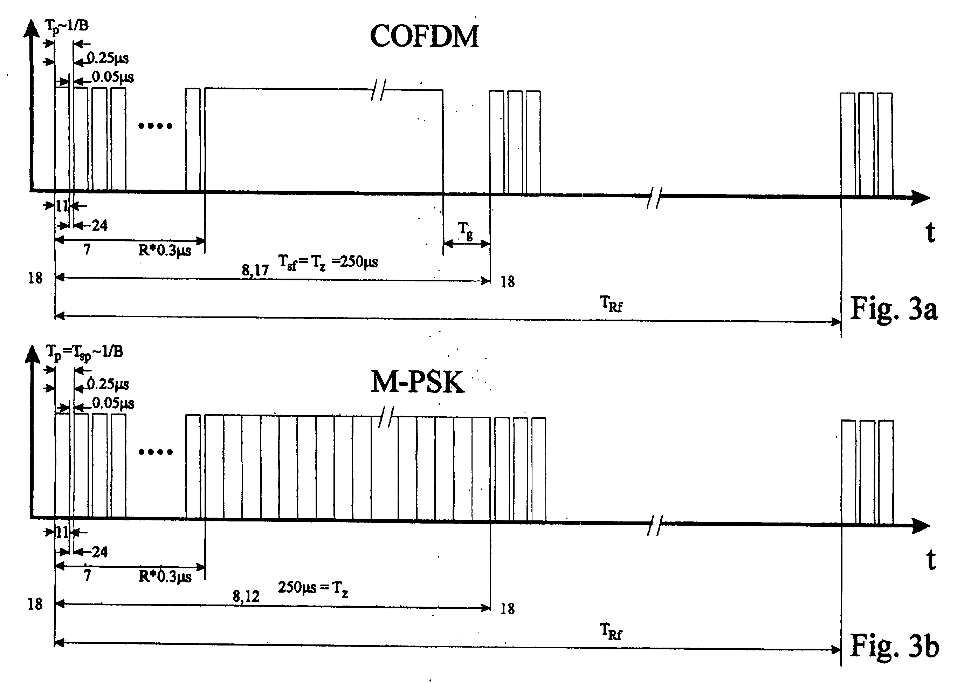

Fig. 3: Darstellung der zeitlichen Abfolge der Pegelprüfvorgänge, getriggert durch den Symboltakt 18. Während der gesamten Prüfzeit 7 werden nacheinander die Einzelantennen für die Prüfzeit 11 aufgeschaltet und der dazugehörige Empfangspegel ermittelt. Nach einer Umschaltzeit 24 wird die nächste Einzelantenne aufgeschaltet, so dass nacheinander bis zu R Einzelantennen pegelmäßig bewertet werden können.

3a: COFDM-Modulation: R Pegelprüfvorgänge der Pegelprüfdauer $T_p$ = 1/B am Anfang eines Symbols der FDM-Symboldauer $T_{sf}$ und einem hierzu gleichlang gewählten Prüfzyklus-Zeitabstand $T_z$.

b: M-PSK-Modulation: R Pegelprüfvorgänge der Pegelprüfdauer $T_p$ = 1/B in aufeinander folgend empfangenen Symbolen der MPSK-Symboldauer $T_{sp}$ = 1/B, initiiert in geeignet gewähltem Prüfzyklus-Zeitabstand $T_z$.

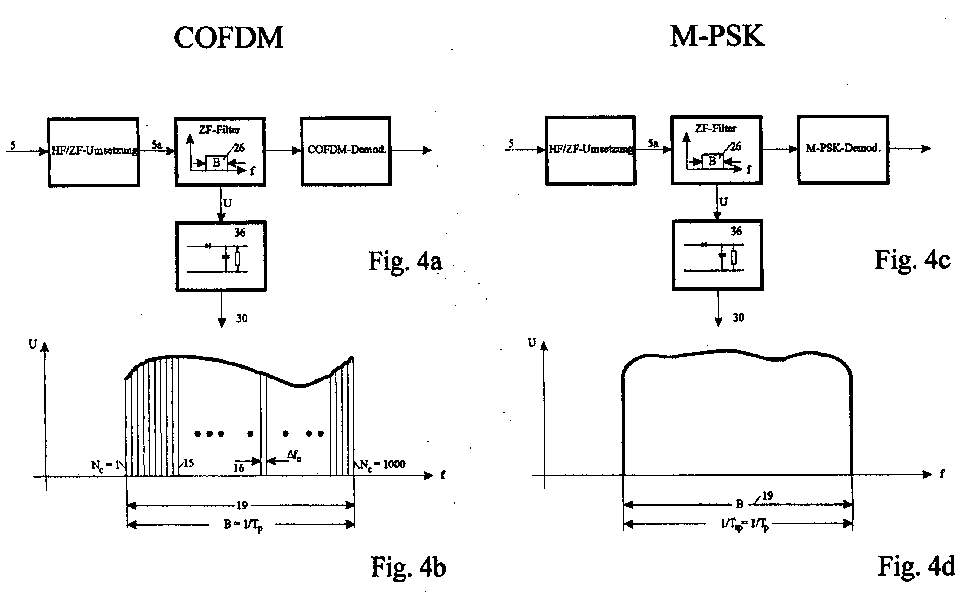

Fig. 4a: Wirkungsweise der Empfangspegel-Prüfeinrichtung 25 in der ZF-Ebene des Empfängers mit Empfangspegelindikator 36 für den Empfang von COFDM-Signalen.

4b: Spektrale Darstellung des COFDM-Signals mit $N_c$ Unterträgern 15 mit einem spektralen Frequenzabstand $\Delta f_c$ bei einer Bandbreite B mit geringer Pegelschwankung der Einzelträger aufgrund des frequenzdispersiven Übertragungskanals.

4c: Wirkungsweise der Empfangspegel-Prüfeinrichtung 25 in der ZF-Ebene des Empfängers mit Empfangspegelindikator 36 für den Empfang von M-PSK-Signalen.

4d: ZF-Frequenzspektrum der M-PSK-Signale

4e: Erfindungsgemäße Ausgestaltung der Empfangspegel-Prüfeinrichtung 25.

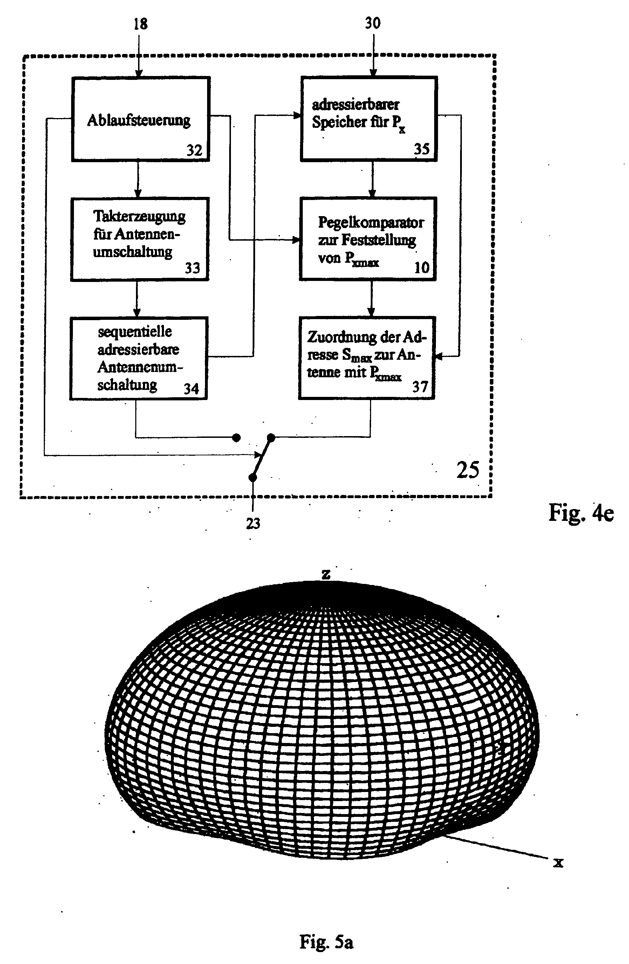

Fig. 5a: Dreidimensionales nahezu omnidirektionales Richtdiagramm für zirkulare Polarisation einer für einen Satellitenrundfunkdienst geeigneten Antenne über ideal leitender Ebene.

5b: Dreidimensionales Richtdiagramm einer erfindungsgemäßen Empfangsanlage mit unterschiedlichen Hauptempfangsrichtungen 22.

5c: Mit einer erfindungsgemäßen Empfangsanlage einstellbare Hüllfläche für geforderten Antennengewinn mit zirkular polarisierten Wellen mittels sektoraler Richtdiagramme 9.

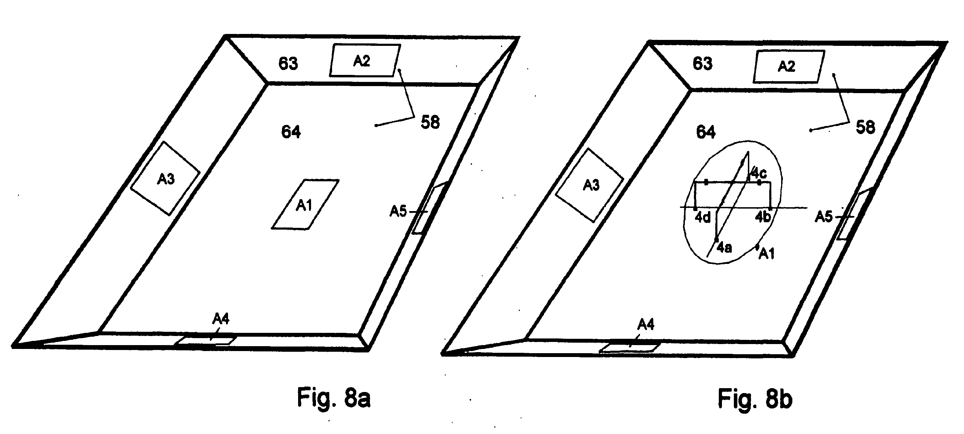

5d: Verformung des Vertikaldiagramms einer ursprünglich auf einer leitenden Platte montierten Antenne mit einem Diagramm nach Fig. 5a durch Einbringung in eine leitende, wannenartige Vertiefung 58 (Fig. 8).

5e: Erfindungsgemäßes dreidimensionales Diagramm einer Einzelantenne mit sektoraler Ausleuchtung.

Fig.6: Erfindungsgemäße Antennenanlage mit einer Einzelantenne A1 auf dem Heckdeckel und weiteren in die Fahrzeugkarosserie integrierten Antennen A2 bis A5.

Fig.7: Erfindungsgemäße Einzelantennen A1 bis A3, deren Richtdiagramme zusätzlich durch Schaltdioden 38 und Blindelemente 39 gestaltet werden können.

Fig.8a: Erfindungsgemäße Antennenanlage in einer metallischen, wannenartigen Vertiefung 58 mit Einzelantennen A1 bis A5, die als Patchantennen ausgeführt sind.

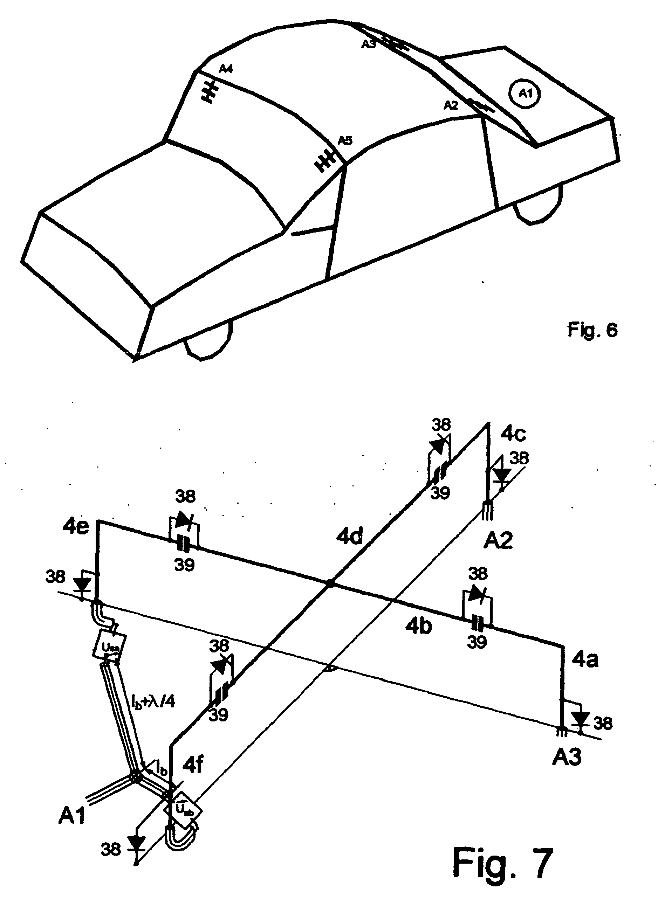

8b: Wie Fig. 8a, jedoch mit einer Einzelantenne A1 ähnlich Fig. 7.

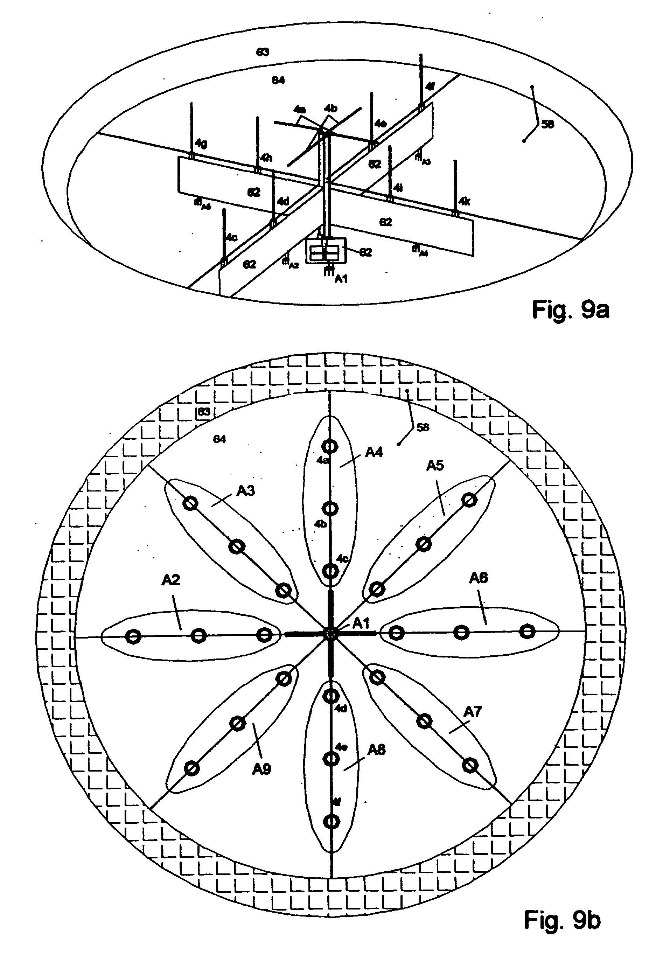

Fig.9a: Erfindungsgemäße Antennenanlage in einer metallischen, wannenartigen Vertiefung 58 mit einer als horizontalem Kreuzdipol ausgeführten Einzelantenne A1 und aus Antennenteilen 4c und 4d, über ein Zusammenschaltnetzwerk 62 gebildeten Einzelantenne A2 und in ähnlicher Weise gebildeten Einzelantennen A3 bis A5.

8b: Draufsicht auf eine der Figur 9a ähnlichen, erfindungsgemäßen Antennenanlage 1 mit insgesamt 8 sternförmig angeordneten Einzelantennen A2 bis A9.

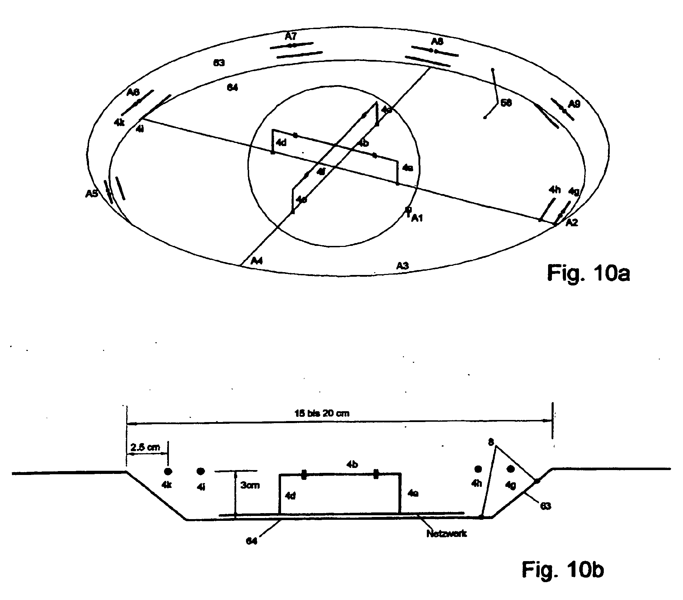

Fig.10a: Anordnung erfindungsgemäßer Einzelantennen mit einer Einzelantenne A1 ähnlich Fig. 7 im Zentrum einer kreisförmigen wannenartigen Vertiefung 58 und weiterer Einzelantennen A2 bis A9, die als horizontale Zweiergruppenantennen vor den schrägen Wannenwänden 63 angeordnet sind.

10b: Schnitt durch die erfindungsgemäße Antennenanordnung nach Fig. 10a.

Die vorliegende Erfindung wird im Folgenden am Beispiel einer Satellitenfunkempfangsanlage mit Unterstützung durch die terrestrische Ausstrahlung des gleichen Signalinhalts für Fahrzeuge bei der Trägerfrequenz f von ca. 2,3 GHz erläutert. In diesem Bereich beträgt die Freiraumwellenlänge $\lambda$ = 12 cm. Im Gegensatz zu den terrestrischen Funksystemen im Meterwellenbereich sind Signale, die sich mit großen Laufzeitdifferenzen bei dieser Frequenz einem Direktsignal überlagern, von kleiner Intensität, so dass sich der Hauptteil solcher Signale aus Reflexionen in der näheren Umgebung ausammensetzt. Demzufolge ist die durch die Mehrwegeausbreitung bedingte Übertragungsbandbreite des Übertragungskanals zwischen Sende- und Empfangsantenne zumeist größer als 10 MHz einzuschätzen.

Bei einem derartigen Rundfunksystem werden z.B. Signale gleichen Inhalts jeweils von zwei Satelliten und von terrestrischen Sendestationen über eine HF-Kanalbandbreite B von jeweils ca. 4 MHz in enger Frequenznachbarschaft zueinander ausgestrahlt. Hierbei wird für die Übertragung vom Satelliten meist das digitale QPSK-Verfahren und für die terrestrische Übertragung der Signale meist das COFDM-Verfahren angewandt. In beiden Fällen ist es zwingend notwendig, die mit der Auswahl des günstigsten Empfangssignals 5 einher gehende Prüfung der Signale derart zu gestalten, dass kein Datenverlust auftritt bzw. dieser so gering wie möglich ist, so dass insgesamt aufgrund der Vermeidung von Pegeleinbrüchen und damit im Zusammenhang stehenden Phasenfehlern die Bitfehlerrate über eine Fahrstrecke drastisch reduziert wird.

Erfindungsgemäß wird dies mit der in einer Grundform in Fig. 1a dargestellten Diversity-Empfangsanlage bei beiden digitalen Modulationsarten (COFDM bzw. QPSK) dadurch bewirkt, dass die Pegelfeststellung des Hochfrequenzsignals innerhalb der HF-Kanalbandbreite B mit Hilfe der Empfangspegel-Prüfeinrichtung 25 jeweils mit der minimal möglichen Pegelprüfdauer 11 erfolgt und in vorteilhafter Weise zeitlich aufeinanderfolgend durchgeführt wird. Sowohl die Kodierung des OFDM-Signals, gekennzeichnet durch C, als auch die Zahl M der Phasenzustände des MPSK-Signals (bei QPSK ist M = 4), ist ohne Einfluss in Bezug auf die mit der Erfindung gegebene Lehre. Durch sukzessive vergleichende Pegelprüfung durch Umschaltungen mit Hilfe der logischen Schalteinrichtung 2 werden die verfügbaren Empfangssignale sukzessive im Rahmen eines Prüfzyklus mit Hilfe eines Pegelkomparators 10 und eines adressierbaren Speichers 35 geprüft und ein günstiges Empfangssignal 5 ausgewählt.

Diese Prüfzyklen werden erfindungsgemäß jeweils in laufender Folge nach Ablauf eines in geeignet gewähltem Prüfzyklus-Zeitabstand $T_z$ wiederholend initiiert. Hierbei ist es vorteilhaft, nach Ablauf eines Prüfzyklus und Auswahl des günstigsten Empfangssignals 5 diese Einstellung innerhalb der verbleibenden Zeit innerhalb des Prüfzyklus-Zeitabstands $T_z$ beizubehalten. Aufgrund, der begrenzten HF-Kanalbandbreite B kann die sichere Feststellung des Empfangspegels nicht schneller erfolgen als in der Pegelprüfdauer $T_p$ ~ 1/B. Die für die Antennenumschaltung selbst benötigte Umschaltzeit 24 ist um eine Größenordnung kleiner als die Pegelprüfzeit 11, so dass die Pegelprüfung und die Umschaltung zusammen innerhalb der Pegelprüfdauer $T_p$ 13 erfolgen können. Für die Einstellung eines erfindungsgemäßen Prüfzyklus-Zeitabstands $T_z$ gilt folgende Beziehung, wenn das günstigste Empfangssignal 5 über die Wegstrecke von einer halben Wellenlänge Z mal aktualisiert werden soll:

$$T_z \leq \frac{500ms}{Z \cdot f_{GHz} \cdot v_{kmh}} \qquad (1)$$

Mit Z = 5, $f_{GHz}$ = 2,33 und $V_{kmh}$ = 100 ergibt sich $T_z$ < 430$\mu$s und bei $V_{kmh}$ = 175 ergibt sich $T_z$ <= 250$\mu$s.

Hierbei ist es erfindungsgemäß wesentlich, dass die für die Prüfung und Aktualisierung des günstigsten Empfangssignals 5 benötigte Gesamtzeit $R \cdot T_p$ von R Prüfungen wesentlich kleiner ist als der Prüfzyklus-Zeitabstand $T_z$, so dass die Anzahl der mit größerer Unsicherheit identifizierten Symbole infolge des Selektionsprozesses bei QPSK-Modulation möglichst klein ist. Für dieses Verhältnis gilt mit Gleichung (1)

$$\frac{R \cdot T_p}{T_z} \geq 2 \cdot 10^{-6} \cdot Z \cdot R \cdot v_{kmh} \cdot f_{GHz} / B_{MHz} \qquad (2)$$

Mit R = 10 Pegelprüfungen pro Prüfzyklus und einer Fahrgeschwindigkeit von 175 km/h ergibt sich der für die Auswahl des günstigsten Empfangssignals 5 notwendige relative Zeitanteil gemäß Gleichung (2) bei Einstellung des größtmöglichen Prüfzyklus-Zeitabstands $T_z$ mit den übrigen o.g. Werten zu lediglich 0,2%.

Bei der COFDM-Modulation ist es vorteilhaft, wenn der Prüfzyklus-Zeitabstand $T_z$ nach Gleichung (1) größer gewählt werden kann als die FDM-Symboldauer $T_{af}$ und der gesamte Prüfzyklus mit R notwendigen Pegelprüfungen innerhalb einer FDM-Symboldauer $T_{sf}$ durchgeführt wird und die Gesamtzeit $R \cdot T_p$ von R Prüfungen im Interesse der sicheren Symbolidentifikation wesentlich kleiner ist als die FDM-Symboldauer $T_{sf}$. Damit ergibt sich in Analogie zu Gleichung (2) mit $T_{sf} = 1/\Delta_{fc}$, mit $B = N_c \cdot \Delta f_c$ und mit $T_p = 1/B$ das Verhältnis $V_p$.

$$V_p = \frac{R \cdot T_p}{T_{sf}} = \frac{R}{N_c} \qquad (3)$$

Mit $N_c$ = 1000 und R=10 ist dieses Verhältnis $V_p$ = 1% und klein genug. Die Reduktion der wirksamen, für die Symbolidentifikation zur Verfugung stehenden Zeit ist somit nur unwesentlich geschmälert. Bei zu kleiner Anzahl $N_c$ der Unterträger könnte sich für das in Gleichung (3) angegebene Verhältnis ein zu großer Zeitanteil für die Pegelprüfungen ergeben. Deshalb ist es erfindungsgemäß vorgesehen, z. B. die Zahl von R Prüfungen auf eine Anzahl S aufeinanderfolgender Symbole aufzuteilen, so dass sich die innerhalb einer FDM-Symboldauer $T_{sf}$ notwendige Prüfzeit als $R \cdot T_p/S$ darstellt und entsprechend für Gleichung (3) gilt:

$$V_p = \frac{R \cdot T_p}{T_{sf} \cdot S} = \frac{R}{N_c \cdot S} \qquad (4)$$

Ist der zulässige Prüfzyklus-Zeitabstand $T_z$ größer als die FDM-Symboldauer $T_{sf}$, so ist es erfindungsgemäß ausreichend, die Aktualisierung des günstigsten Empfangssignals nicht bei jedem gesendeten Symbol durchzuführen. Zur Festlegung des Prüfzyklus-Zeitabstands $T_z$ bei gegebener HF-Kanalbandbreite B, gegebener Anzahl der Unterträger $N_c$ und maximaler Fahrgeschwindigkeit $V_{kmh}$ dient folgende Beziehung:

$$\frac{T_z}{T_{sf}} = \frac{B_{MHz} \cdot 10^6}{2 \cdot f_{GHz} \cdot v_{kmh} \cdot N_c} \qquad (5)$$

Es genügt somit, unter Beachtung von Gleichung (4), nur in jedem ganzzahlig ($T_z/T_{sf}$)-ten aufeinander folgenden Symbol einen Prüfzyklus durchzuführen.

Mit den beispielhaft o.g. Zahlenwerten ergibt sich jedoch für eine maximale Fahrgeschwindigkeit von $V_{kmh}$ = 175 ein Verhältnis von $T_z/T_{sf} \sim 1$, d.h. der Prüfzyklus-Zeitabstand $T_z$ kann erfindungsgemäß gleich der FDM-Symboldauer $T_{sf}$ gewählt werden. Somit wäre bei Z = 5 Aktualisierungen über eine Fahrstrecke von $\lambda/2$ während nur jedes zweiten empfangenen Symbols die maximale Fahrgeschwindigkeit auf ca. 80 km/h begrenzt.

In einer besonders aufwandsarmen vorteilhaften Ausführungsform der Erfindung sind nach Fig.1a die Empfangspegel-Prüfeinrichtüng 25 und die logische Schalteinrichtung 2 in der räumlichen Nachbarschaft der Antennen-ordnung 20 angeordnet und das Symboltaktsignal 18 wird zusammen mit dem Empfangspegel 30 über die Hochfrequenzleitung zwischen der Antennenanschlüssstelle 21 und dem Empfänger 3 zugeführt. Mit dieser Ausführungsform der Erfindung ist der Vorteil verbunden, dass der Empfänger 3 nicht wesentlich für eine Empfangsanlage nach der Erfindung vorgerüstet sein muss, weil das Symboltaktsignal 18 und der Empfangspegel 30 in der Regel im Empfänger 3 im Allgemeinen vorliegen.

Fig. 1a zeigt also eine Grundform einer Empfangsanlage nach der Erfindung, wobei im Empfänger 3 ein Bandpass 26 und ein Empfangspegelindikator 36 enthalten sind, dessen Ausgangssignal den Empfangspegel 30 wiedergibt und einer Empfangspegel-Prüfeinrichtung 25 zugeführt ist. Zusätzlich wird der Empfangspegel-Prüfeinrichtung 25 das Symboltaktsignal 18 zugeleitet, so dass das daraus abgeleitete Umschaltsignal 23 die logische Schalteinrichtung 2 gemäß der oben beschriebenen Folge von Pegelprüfungen zur Auswahl eines guten bzw. des günstigsten Empfangssignals 5 verwendet werden kann. Hierbei enthält die Antennenanlage 1 eine Reihe von Einzelantennen A1, A2, A3, welche aus Antennenteilen 4a, 4b, 4c im Hinblick auf die erforderliche Diversität der Empfangssignale 5 mit vorteilhaft großem Freiheitsgrad gestaltet werden können. An der Antennenanschlussstelle 21 liegt somit für die Auswertung jedes Symbols ein optimales Empfangssignal 5 am Eingang des Empfängers 3 vor.

Fig. 1b zeigt eine Fig. 1a ähnliche erfindungsgemäße Anordnung, jedoch mit im Satellitenfunkempfänger 3 enthaltener Empfangspegel-Prüfeinrichtung 25. In Fig. 1c ist ein kombiniertes erfindungsgemäßes Antennendiversitysystem für gleichzeitigen und koordinierten Empfang von digital modulierten Satellitenfunksignalen nach dem Q-PSK-Verfahren und nach dem COFDM-Verfahren digital modulierten von terrestrischen Funkstellen ausgestrahlten Funksignalen in benachbarten Hochfrequenzbändern der gleichen HF-Kanalbandbreite B jeweils desselben, aber durch Laufzeit versetzten Signalinhalts dargestellt.

Beide Systeme bestehen aus der Antennenanordnung 20 mit der Antennenanlage 1, welche diversitätsmäßig unterschiedliche Empfangssignale 5 liefert. Mit Hilfe der logischen Schalteinrichtung 2a und der Empfangspegelprüfeinrichtung 25a wird dem Empfängerteil 3a für den Empfang des QPSK-Satellitensignals an der Antennenanschlussstelle 21a über den Prüfzyklusvorgang jeweils in einem Prüfzyklus-Zeitabstand $T_z$ das günstigste Empfangssignal 5 aktualisiert angeboten. Ebenso liegt an der Antennenanschlussstelle 21b jeweils nach den Pegelprüfvorgängen am Anfang einer FDM-Symboldauer $T_{sf}$ das günstigste Empfangssignal 5 für den Empfängerteil 3b für den Empfang des COFDM-modulierten terrestrischen Signals vor. Beide Empfängerteile 3a und 3b sind im Empfänger 3 zur Auswertung der Empfangssignale gleichen Signalinhalts enthalten. Für die Antennenauswahl werden erfindungsgemäß im QPSK-Empfänger der Empfangspegel 30a und das Symbohaktsignal 18a der Empfangspegelprüfeinrichtung 25a mit Pegelkomparator 10a zugeführt.

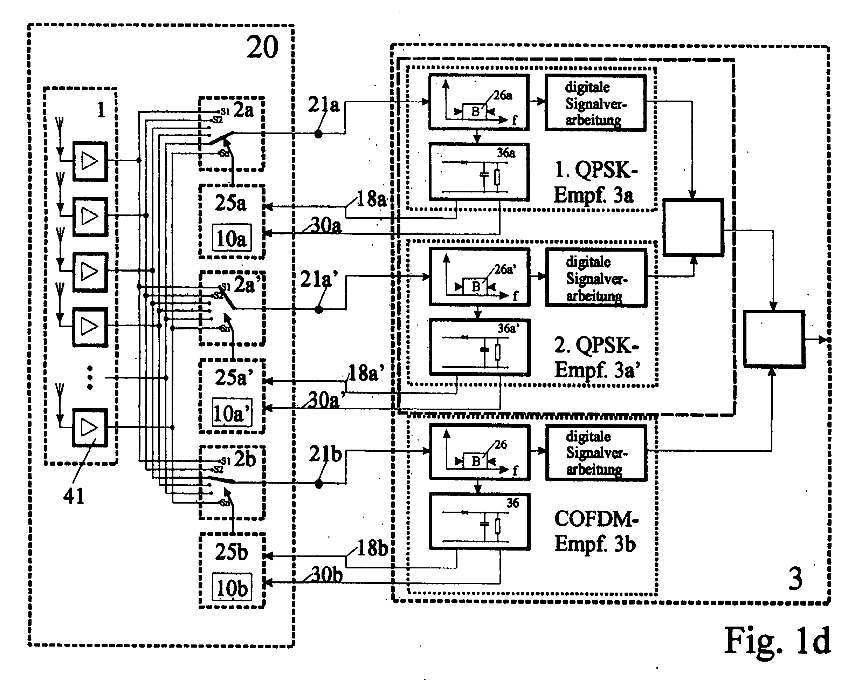

In Fig. 1d ist das kombinierte erfindungsgemässe Antennendiversitysystem in Fig. 1b ergänzt um einen weiteren Zweig, dessen Komponenten mit a' gekennzeichnet sind, für den gleichzeitigen und koordinierten Empfang eines weiteren nach dem QPSK-Verfahren digital modulierten Satellitenfunksignals, welches zur Unterstützung der Übertragungssicherheit von einem weiteren Satelliten ausgestrahlt wird. Alle empfangenen Signale werden im Empfänger 30 koordiniert und ausgewertet, so dass sich durch die Antennendiversity-Funktion in Verbindung mit den beiden Satelliten-Übertragungswegen und dem terrestrischen Übertragungspfad eine bestmögliche Sicherheit der Datenübertragung ergibt.

Sowohl bei Signalen mit der QPSK-Modulation als auch der COFDM-Modulation des HF-Trägers wird erfindungsgemäß deshalb der Prüfzyklus-Zeitabstand $T_z$ derart gewählt, dass innerhalb dieser Zeit die Empfangsbedingungen praktisch konstant sind. Dies wird dadurch bewirkt, dass innerhalb der durchfahrenen Wegstrecke von einer halben Wellenlänge des hochfrequenten Trägers diese Einstellung mindestens fünfinal aktualisiert ist. Dies ist in Fig. 2 mit Hilfe der Empfangssignale der Antennen A1, A2 und A3 über die auf die Wellenlänge $\lambda$ bezogene Fahrstrecke s mit Hilfe des darunter beispielhaft dargestellten Zeitrasters für den Prüfzyklus-Zeitabstand $T_z = 250\mu s$ bei einer Fahrgeschwindigkeit von 100 km/h veranschaulicht.

In Fig. 4a ist die Auswertung dieses Frequenzbandes bei vorliegender COFDM-Modulation des HF-Trägers mit Hilfe des Empfangspegelindikators 36 angegeben und Fig. 4b zeigt die Unterträger im Frequenzabstand $\Delta f_c$ 16 in der Zwischenfrequenzebene des Empfängers. Bei einer dem Frequenzabstand $\Delta f_c$ 16 entsprechenden FDM-Symboldauer $T_{sf}$ von z.B. 250$\mu$s, welche zur zeitparallelen Phasenidentifikation der $N_c$ Unterträger zur Verfügung steht, wird erfindungsgemäß ein im Vergleich hierzu technisch vernachlässigbar kleiner Zeitanteil dazu verwendet, aus den verfügbaren diversitätsmäßigen Empfangssignalen 5 dasjenige zu ermitteln, welches ein hinreichend großes Signalrauschverhältnis ergibt oder im Vergleich mit den andern das maximale Signalrauschverhältnis liefert. Dies ist durch die im Vergleich zum Frequenzabstand der Unterträger große HF-Kanalbandbreite B= $N_c \cdot \Delta f_c$ 19 möglich, so dass die Pegelprüfzeit 11 um die Größenordnung der Anzahl $N_c$ der Unterträger kleiner gewählt werden kann als die Symbolzeit $T_{sf}$ 14. Bei der großen Anzahl von $N_c$ = 1000 können somit bis zu 10 diversitätsmäßige Empfangssignale 5 im Hinblick auf den Pegel in der Folge mit einem hierzu erforderlichen Zeitaufwand von etwa 1 bis 2 % der FDM-Symboldauer $T_{sf}$ untersucht werden. Der erfindungsgemäß gewählte Prüfzyklus-Zeitabstand $T_z$ definiert, nach wie vielen empfangenen Symbolen das folgende Symbol für eine Aktualisierung des günstigsten Empfangssignals 5 herangezogen wird.

In Fig. 4c erfolgt die Auswertung dieses Frequenzbandes bei vorliegender M-PSK-Modulation des HF-Trägers ebenfalls mit Hilfe des Empfangspegelindikators 36 und Fig. 4d zeigt das bandbegrenzte Frequenzspektrum der M-PSK-Empfangssignale in der Zwischenfrequenzebene des Empfängers. Bei einer QPSK-Symboldauer $T_{sp}$ (von z.B. 0,25 $\mu$s=1/B = 1/(4 MHz)) wird erfindungsgemäß ein im Vergleich hierzu technisch vernachlässigbar kleiner Zeitanteil

des erfindungsgemäßen Prüfzyklus-Zeitabstands $T_z$ dazu verwendet, aus den verfügbaren diversitätsmäßigen Empfangssignalen 5 dasjenige zu ermitteln, welches ein hinreichend großes Signalrauschverhältnis ergibt oder im Vergleich mit den andern das maximale Signalrauschverhältnis liefert. Dies ist durch die große Bandbreite B im Hinblick auf Gleichung (1) begründet.

Bei einer QPSK-Symboldauer $T_{sp}$ = 1/(4 MHz) = 0,25 μs ergibt sich für R Pegelprüfungen eine relative Anzahl von lediglich R·($T_{sp}/T_z$) = R/1000 von Symbolen, welche zwar nicht mit einem optimal verfügbaren Empfangssignal 5 empfangen werden, die richtige Symbolidentifikation jedoch bei der überwiegenden Mehrzahl dieser Symbole aufgrund der Statistik des Empfangsfeldes auch dann noch wahrscheinlich ist. Die wenigen Symbole, welche dabei einer Fehlidentifikation unterliegen können, werden durch die bei jedem digitalen Kommunikationssystem gegebenen Redundanz mit Fehlerkorrektur korrigiert. Die übrigen, während des Prüfzyklus-Zeitabstands $T_z$ gesendeten Symbole, werden dagegen mit der vollen Diversitätswirkung der verfügbaren Empfangssignale empfangen. Damit wird bei geeigneter Auswahl von Antennen in der Antennenanlage 1 eine hohe Diversityeffizienz erreicht, welche die starke Reduzierung der Bitfehlerrate über eine Fahrstrecke bewirkt und die Wahrscheinlichkeit des Abbrechens der Funkverbindung mit den Schwierigkeiten der Neusynchronisation stark vermindert. In Fig. 3b ist die QPSK-Symboldauer $T_{sp}$ = 1/B, welche etwa gleich der Pegelprüfdauer $T_p$ ist, der Zeitablauf für R Pegelprüfvorgänge sowie einen erfindungsgemäß gewählten Prüfzyklus-Zeitabstand $T_z$ dargestellt.

Für die Realisierung eines derartigen Ablaufs für QPSK-Modulation des HF-Trägers mit der Trägerfrequenz f ist beispielsweise in der Empfangspegel-Prüfeinrichtung 25 - welcher sowohl der Empfangspegel 30 als auch das im Empfänger generierte Symboltaktsignal 18 zugeführt ist - ein triggerbarer Pulsgenerator 31 vorhanden. Dieser ist gemäß der Anzahl R der zu prüfenden Empfangssignale 5 vom Symboltaktsignal 18 getriggert und gibt somit eine Pulsfolge ab, deren Pulsabstandszeit gleich der QPSK-Symboldauer $T_{sp}$ ~ 1/B beträgt. Die betreffende Pulsfolge wird jeweils sowohl an den Pegelkomparator 10 mit adressierbarem Speicher 35 als auch an die logische Schalteinrichtung 2 zur sequentiellen bzw. adressierten Anschaltung der Empfangssignale 5 zur Auswahl eines diversitätsmäßig günstigen Empfangssignals 5 geleitet. Nach Ablauf der notwendigen R Pegelprüfvorgänge bleibt der Zustand des triggerbaren Pulsgenerators 31 und somit auch der logischen Schalteinrichtung 2 über ein im triggerbaren Pulsgenerator 31 enthaltenes Zeitglied 42 zur Einstellung des Prüfzyklus-Zeitabstands $T_z$ vorzugsweise unverändert, bis nach Ablauf von $T_z$ der vergleichende Prüfzyklus neu eingeleitet wird.

Bei Signalen mit der COFDM-Modulation des HF-Trägers werden erfindungsgemäß die Pegeleinbrüche ebenfalls dadurch reduziert, dass der Pegel des aktuell angeschalteten Hochfrequenzsignals innerhalb der HF-Kanalbandbreite B, also jeweils nach der minimalen Pegelprüfdauer $T_p$ = 1/B, festgestellt wird. Das COFDM-Signal setzt sich aus der zeitlichen Folge von jeweils $N_c$ parallel ausgesendeten, in der Phase modulierten Unterträgern mit dem Frequenzabstand $\Delta f_c$ zusammen. Jedes Paket dieser Unterträger wird jeweils über die FDM-Symboldauer $T_{sf}$ = 1/$\Delta f_c$ ausgesendet. Für die Auswahl eines diversitätsmäßig möglichst günstigen Empfangssignals 5 kann somit die Feststellung der Gesamtenergie dienen, welche im ZF-Bereich in einem Bandpaßfilter 26 der Kanalbandbreite B = $N_c \cdot \Delta f_c$ über die Pegelprüfdauer $T_p$ auftritt. Hierbei ist $N_c$ (z.B. $N_c$ = 1000) die Anzahl der nach dem COFDM-Verfahren gesendeten Unterträger, deren Frequenzabstand ($\Delta f_c$) 16 z. B. 4 kHz beträgt.

Bei diesem Verfahren erfolgt die mehrfache vergleichende Pegelprüfung am Anfang jedes gesendeten Symbols. Mit der Pegelprüfdauer $T_p$ = 1/B = 0,25 μs wird beim vorliegenden Beispiel für die Auswahl des günstigsten Empfangssignals 5 bei R Pegelprüfungen eine gesamte Prüfzeit von R·0,25 μs in Anspruch genommen. Dies entspricht bei einer FDM-Symboldauer $T_{sf}$ = 1/$\Delta f_c$ = $N_c$/B = 1000·0,25μs = 250μs. Bei diesen Größenverhältnissen steht für die Symbolidentifikation somit die gesamte restliche Zeit der FDM-Symboldauer $T_{sf}$ von (1-R/$N_c$) = (1-R/1000)·250μs zur Verfügung. Diese unwesentliche Reduzierung der für die Identifizierung zur Verfügung stehenden Zeit ist mit keiner Verschlechterung der Identifizierungssicherheit verbunden. Wie aus Fig. 2 ersichtlich, ist diese Symboldauer hinreichend kurz, um die erfindungsgemäß häufige Aktualisierung des günstigsten Empfangssignals 5 auch bei hohen Fahrgeschwindigkeiten sicherzustellen. Der vergleichende Prüfvorgang am Anfang der FDM-Symboldauer $T_{sf}$ mit den Pegelprüfzeiten $T_p$ mit den Umschaltzeiten von etwa 0,25 μs sowie der Guard-Zeit $T_g$ ist in Fig. 3a dargestellt.

Um einen derartigen Ablauf zu realisieren, ist beispielsweise in der Empfangspegel-Prüfeinrichtung 25, welcher sowohl der Empfangspegel 30 als auch das im Empfänger generierte Symboltaktsignal 18 zugeführt ist, auch im Fall der FDM-Modulation ein triggerbarer Pulsgenerator 31 vorhanden, welcher vom Symboltaktsignal 18 getriggert ist und der - ausgelöst durch die Triggerung - eigenständig gemäß der Anzahl R der zu prüfenden Empfangssignale 5 eine entsprechend gestaltete Pulsfolge abgibt, deren Pulsabstandszeit vorzugsweise möglichst klein, also etwa gleich der Pegelprüfdauer $T_p$ ~ 1/B, gewählt ist. Die Pulsabstandszeit besteht aus der Pegelprüfzeit 11 plus der vergleichsweise kleinen Umschaltzeit 24. Die betreffende Pulsfolge wird jeweils sowohl an den Pegelkomparator 10 mit adressierbarem Speicher 35 als auch an die logische Schalteinrichtung 2 zur sequentiellen bzw. adressierten Anschaltung der Empfangssignale 5 zur Auswahl eines diversitätsmäßig günstigen Empfangssignals 5 geleitet. Nach Ablauf der notwendigen R Pegelprüfvorgänge bleibt der Zustand des triggerbaren Pulsgenerators 31 und somit auch der logischen Schalteinrichtung 2 über die verbleibende Zeit innerhalb der FDM-Symboldauer $T_{sf}$ unverändert, bis mit einem der folgenden Symbole, vorzugsweise dem nächsten Symbol, der triggerbare Pulsgenerator 31 neu getriggert wird und der vergleichende Prüfryklus neu eingeleitet wird.

Ein für beide digitale Modulationsarten mögliches Blockdiagramm für eine Ausführungsform einer derartigen Anordnung ist beispielhaft in Fig. 4e angegeben. In einer zeitgemäßen Realisierung ist die gesamte Empfangspegel-Prüfeinrichtung 25 als Mikroprozessor ausgeführt, welcher programmgesteuert z.B. die in Fig. 4c angegebenen Programmblöcke abarbeitet. Zur Ermittlung des günstigsten Empfangssignals 5 kann beispielsweise die in Fig. 4e angegebene Anordnung in der Empfangspegel-Prüfeinrichtung 25 verwendet werden. Diese besteht aus einer Ablaufsteuerung 32, welche sowohl die Takterzeugung für die Antennenumschaltung 33 als auch den Pegelkomparator 10 zur Feststellung des günstigsten Empfangspegels 5 ($P_{xmax}$) sowie einen Umschalter zur Ausgabe des Umschaltsignals 23 ansteuert. Mit Hilfe einer adressierbaren Antennenumschaltung 34, einem adressierbaren Speicher 35 für die Empfangspegel $P_x$ 30 der x-ten Antenne und dem Pegelkomparator 10 wird die Maximalsignalpegel-Schaltstellung $S_{max}$ 37 ermittelt und als Umschaltsignal 23 ausgegeben.

Damit ist klargestellt, dass für beide hier betrachteten Modulationsarten erfindungsgemäß ein Antennendiversitysystem angegeben ist, welches bei größtmöglicher Datensicherheit während des Auswahlprozesses für das günstigste Empfangssignal 5 die Wahrscheinlichkeit für das Auftreten von Pegeleinbrüchen auf bestmögliche Weise reduziert.

Dies wird nochmals anhand der Darstellung in Fig. 3a verdeutlicht. Mit jeder Selektion eines günstigen Empfangssignals 5 zu Beginn oder am Ende eines gesendeten Symbols werden somit bei COFDM-Modulation von deren $N_c$ Unterträgern mit jedem Symbol, d.h. während der FDM-Symboldauer $T_{sf}$, die Zahl von 2 x $N_c$ Bits mit gutem Signalrauschverhältnis übertragen. Bei der M-PSK-Modulation des HF-Trägers in Fig. 3b erfolgen R Pegelprüfungen in zeitlich aufeinanderfolgenden Symbolen innerhalb des gewählten Prüfzyklus-Zeitabstands $T_z$. Wird dieser gleich der FDM-Symboldauer $T_{sf}$ gewählt, so werden mit beiden Modulationsarten innerhalb gleicher Zeiten etwa gleiche Informationsmengen übertragen.

Aufgrund der unvermeidbaren Reflexionen und Beugungen im Nahbereich der Antenne entstehen die in Fig. 2 schematisch über der auf die relative Weglänge s/λ bezogen dargestellten Pegelverteilungen von drei Antennen. Die stark ausgezogene Kurve bezeichnet den jeweils maximal verfügbaren Pegel bei Auswahl des günstigsten Empfangssignals 5. Im Bild darunter ist in Fig. 2 bei einer vorausgesetzten Fahrgeschwindigkeit von 100 km/h die Folge der Prüfzyklus-Zeitabstände $T_z$ dargestellt. Pegeleinbrüche treten mit großer Wahrscheinlichkeit im Mittel alle halbe Wellenlänge auf. Bei einer FDM-Symboldauer $T_{sf}$ von 250 μs trifft somit die hinreichende Anzahl von ca. zehn Symbolen auf eine halbe Wellenlänge. Es ist somit möglich, den stark ausgezogenen optimalen Pegelverlauf bei der Signalgewinnung zu realisieren. Wie oben gezeigt, lässt diese Dimensionierung bei Z = 5 eine Fahrgeschwindigkeit von ca. 175km/h zu.

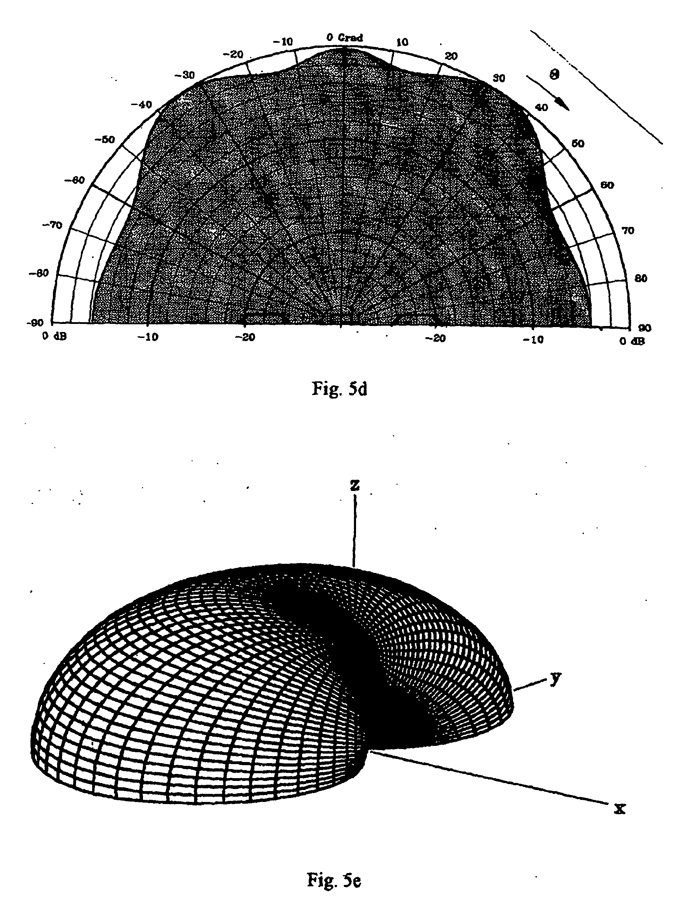

Im Folgenden sollen beispielhaft Antennenanordnungen 20 für erfindungsgemäße Antennendiversitysysteme erläutert werden. Fig. 5a zeigt ein dreidimensionales, nahezu omnidirektionales Richtdiagramm für Zirkularpolarisation einer für einen Satellitendienst geeigneten Antenne, welche weitgehend den gewünschten Forderungen entspricht, wenn diese auf einer ebenen Platte montiert ist (Fig. 8a). Zur Verdeutlichung der Effekte, die eine unsichtbare Anbringung einer Antenne auf dem Fahrzeug im Hinblick auf das Richtdiagramm bewirkt, ist in Fig. 5d die Verformung des Vertikaldiagramms des in Fig. 5a dargestellten Richtdiagramms gezeigt, wenn die betreffende Antenne in eine wannenartige Vertiefung 58, wie in Fig. 5d angedeutet, eingebracht ist. Der vorgeschriebene Antennengewinn wird insbesondere im Winkelbereich der niedrigen Elevation nicht erreicht (s. Fig. 5d). Zum Zwecke der Überwindung einer gegenüber liegenden Abschattung durch Wände kann z.B. ein sektorales Richtdiagramm 9 von der in Fig. 5e dargestellten Form eingesetzt werden. Zwangsweise werden für die gesamte azimutale Abdeckung mehrere solcher sektoralen Richtdiagamme 9 notwendig.

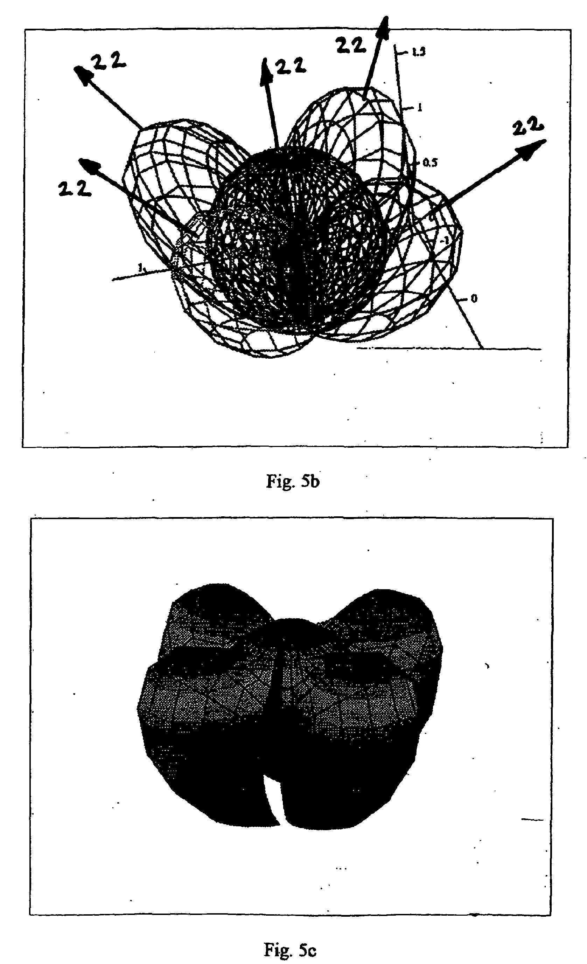

Es zeigt sich demnach, dass das vorgeschriebene Richtdiagramm des Antennengewinns mit einer Einzelantenne an vielen unter fahrzeugspezifischen günstigen Einbauorten nicht erreicht werden kann. Gemäß der vorliegenden Erfindung lassen sich jedoch z.B. mehrere Einzelantennen gestalten, welche unterschiedliche sektorale Richtdiagramme 9 besitzen mit in unterschiedliche Raumrichtungen weisenden Hauptrichtungen 22, wie dies beispielhaft für 5 verschiedene Richtantennen in Fig. 5b gezeigt ist. Bildet man die Hüllfläche über alle Diagramme, so ergibt sich im gezeigten Beispiel ein Diagramm, wie in Fig. 5c, in welchem die Strahlung im Bereich kleiner Elevationswinkel durch die erhöhte Richtwirkung der Einzelantennen angehoben ist. Es zeigt sich ferner, dass sich für unauffällige fahrzeugintegrierte Antennen eine geordnete Zirkularpolarisation für die sektoralen Richtdiagramme 9 mit vertretbarem Aufwand kaum herstellen lassen. Erfindungsgemäß wird deshalb die Erzeugung erhöhter sektoraler Richtwirkungen vorgeschlagen, so dass der 3dB-Verlust, der mit dem Verzicht auf Zirkularpolarisation einhergeht, kompensiert bzw. überkompensiert wird.

In einer vorteilhaften Ausführungsform der Erfindung wird, wie in Fig. 6 dargestellt, eine Antenne A1 mit dem vorgeschriebenen auf die Messplatte bezogenen Richtdiagramm z.B. auf dem Kofferraumdeckel oder unter einem Kunststoff Kofferraumdeckel angebracht. Aufgrund der durch die Rückfensterscheibe und das Dach gegebenen Abschattung, insbesondere im Winkelbereich niedriger Elevation, wird dieser Bereich erfindungsgemäß durch zusätzliche Antennen A4, A5 aufgefüllt. Diese können z.B. wie in der Figur 6 angedeutet, als Richtantennen auf der Windschutzscheibe angeordnet sein. Die mit der Kabelführung zur logischen Schalteinrichtung 2 mit einem derartigen dezentralen System einhergehenden Laufzeitdifferenzen sind bei den gegebenen Fahrzeugabmessungen ohne Einfluss auf die Signaltreue nach der Decodierung. Es ist grundsätzlich denkbar, bei flacher Neigung der Fensterscheiben die gesamte Antennenanlage 1 ausschließlich aus den Richtantennen A2, A3, A4 und A5 auf den Fensterscheiben zu gestalten.

Eine Antennenanlage 1 nach der Erfindung kann vorteilhaft in kleiner Bauhöhe, wie in Fig. 7, ausgestaltet werden. Diese Antenne besteht im Wesentlichen aus zwei gekreuzten Rahmenstrukturen, in welche Blindelemente 39 zur Einstellung eines Richtdiagramms eingebracht sind, welches dem vorgeschriebenen Richtdiagramm mit Zirkularpolarisation bei sperrend geschalteten Dioden 38 weitgehend entspricht. Durch andere Einstellungen der Schaltdioden 38 werden mehrere sektorale Richtdiagramme 9 wechselweise zur Auffüllung der Hüllfläche eingestellt.

In Fahrzeugen wird häufig eine völlig verdeckte Anbringung von Antennen gefordert. Zu diesem Zweck wird in der leitenden Karosserie, wie in Fig. 8a, eine wannenartige Vertiefung 58 geschaffen, welche mit einer Kunststoffabdeckung versehen wird. In einer vorteilhaften Ausführung der Erfindung wird im Zentrum der Wanne auf dem Wannenboden 64 eine Patch-Antenne A1 zur Abdeckung der Steilstrahlung und an den entsprechend geneigt ausgeführten schrägen Wannenwänden 63 zur Gestaltung der sektoralen Richtdiagramme 9 weitere Patch-Antennen angebracht. Zur Verbesserung des Richtdiagramms für Steilstrahlung wird in Fig. 8b anstelle der Patch-Antenne A1 eine Antenne, wie in Fig. 7, wahlweise auch ohne Dioden 38, verwendet. Bei Ausbildung einer wannenartigen Vertiefung 58, welche in Fig. 9a beispielhaft kreisrund ausgeführt ist, können vorteilhaft im Zentrum über dem Wannenboden 64 im geeigneten Abstand zwei gekreuzte, aus den Antennenteilen 4a und 4b gestaltete Dipole angeordnet werden. Zur Verbesserung der Strahlung für niedrige Elevation können erfindungsgemäß zwei unter 90 Grad zueinander angeordnete, aus den vertikalen Antennenteilen 4c, 4d, 4e, 4f und 4g, 4h, 4i, 4k Gruppenantennen gebildet werden.

Deren Signale werden über ein Zusammenschaltnetzwerk 62 mit den Einzelantennenanschlüssen A2 und A3 bzw. A4 und A5 zur Bildung der sektoralen Richtdiagramme 9 für die vier azimutalen Hauptrichtungen 22 (vergl. Bild 5b) zur Verfügung gestellt. Mit Hilfe der erhöhten Richtwirkung der Gruppenantennen für niedrige Elevation wird die durch die schrägen Wannenwände 63 gegebene Abschattung aufgehoben bzw. überkompensiert. Die in Fig. 9a dargestellte Antennenanlage 1 kann vorteilhaft sinngemäß zu der in Fig. 9b dargestellten Antennenanlage 1 mit einer größeren Anzahl von sektoralen Richtdiagrammen 9 erweitert werden. Abhängig vom Anbringungsort einer derartigen Antennenanlage 1 und den durch das Fahrzeug verursachten Abschattungen kann eine derartige Antennenanlage 1 mit unsymmetrisch zum Zentrum angeordneten Gruppenantennen ausgestaltet werden.

In einer weiteren vorteilhaften Ausgestaltung einer Antennenanlage 1 nach der Erfindung werden die schrägen Wannenwände 63 als Reflektoren von daran im geeigneten Abstand angebrachten Gruppenantennen A2 bis A9 mit den horizontal polarisierten Antennenteilen 4h und 4g genutzt (Fig. 10a). Im Zentrum kann vorteilhaft eine Antenne, wie in Fig. 7, wahlweise auch ohne Dioden 38, verwendet werden. In Fig. 10b ist der Querschnitt durch eine derartige wannenartige Vertiefung 58 mit der Anordnung der Gruppenantennen und der Antenne A1 dargestellt. Die eingetragenen Abmessungen gelten für eine bei 2,3 GHz verwendete Antennenanlage 1. Das optimale, mit einer der Gruppenantennen verfügbare sektorale Richtdiagramm 9 lässt sich durch optimale Neigungswinkel der schrägen Wannenwände 63 und der Positionierung der horizontal angeordneten Antennenteile 4g, 4h, 4i und 4k in der Ebene der Karosserieoberfläche erreichen.

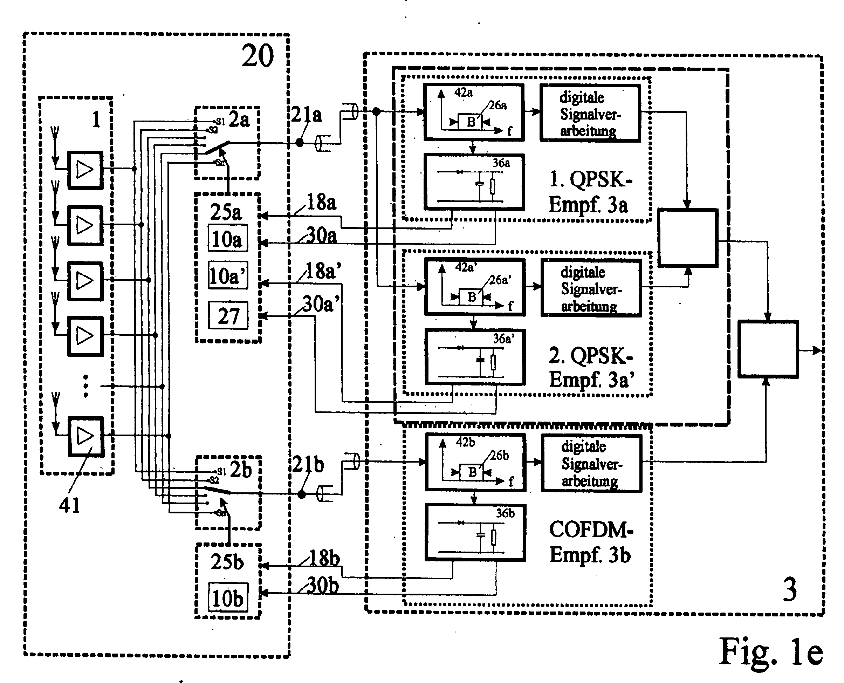

Insbesondere im Fahrzeugbau tragen Hochfrequenz-Leitungsverbindungen erheblich zu den Gesamtkosten einer Empfangsanlage bei. Es ist deshalb dringend geboten, den Kabelaufwand so gering wie möglich zu halten. Zur Verbesserung der Empfangssicherheit ist bei bekannten Satellitenrundfunksystemen z.B. - wie oben bereits erläutert und in Fig. 1d dargestellt - ein Empfänger 3a' mit einem weiteren Empfangszweig für Signale mit QPSK-Modulation vorgesehen, welche von einem weiteren Satelliten für den gleichzeitigen und koordinierten Empfang mit den vom ersten Satelliten ausgestrahlten Funksignalen in einem in der Frequenz nahegelegenen Hochfrequenzband ausgestrahlt werden. Für beide Hochfrequenzbänder sind im Empfänger gesonderte HF-ZF-Teile 42a und 42a' (s.Fig.1e) vorhanden, welche über eine gemeinsame Hochfrequenzleitung 21a zwischen der Antennenanordnung 20 und den Empfängern 3a und 3a' über eine Signalverzweigung dieselben Signale zugeführt sind. Dadurch kann eine Hochfrequenzleitung eingespart werden. Zur Gestaltung einer Diversityfunktion sind der Empfangspegel-Prüfeinrichtung 25a die Empfangspegel 30a und 30a' zugeführt und werden dort jeweils in einem Pegelkomparator 10 mit einem Schwellwert für sichere Symbolidentifikation verglichen. Die binären Ausgangssignale beider Pegelkomparatoren werden einer Logikschaltung 27 zugeleitet, welche über einen Umschaltbefehl an die logische Schalteinrichtung 2a die Zuweisung eines anderen Antennensignals bewirkt, wenn nur eines der beiden Satellitensignale mit kleinerem als den geforderten Mindestpegel zur sicheren Symbolidentifikation empfangen wird, d.h., wenn nicht beide Schwellwerte überschritten sind.

In einer weiteren vorteilhaften Ausgestaltung der Erfindung ist in der Logikschaltung 27 ein Gedächtnis enthalten, welches es ermöglicht, anhand der vorausgegangenen Pegelprüfungen unnötige Umschaltungen zu vermeiden, wenn die Anzahl der oberhalb des Mindestpegels zur sicheren Symbolidentifikation empfangenen Satellitensignale gleich groß ist. Somit ist das System in der Lage, bei minimaler Schaltaktivität stets dasjenige Antennensignal auszuwählen, mit dem die größere Anzahl aus den zwei Satellitensignalen empfangen werden kann. Dies ist insbesondere dann sehr vorteilhaft, wenn in der Antennenanlage 1 nur zwei Antennen - z.B. je eine im Frontbereich und im Heckbereich eines Fahrzeugs - vorhanden sind. Obgleich die getrennte Selektion des für den Empfang jedes Satellitensignals günstigsten Antennensignals mit nur einer gemeinsamen logischen Schalteinrichtung 2a und einer gemeinsamen Hochfrequenzleitung nicht möglich ist, ergibt sich z.B. im Fall von zwei Antennen für jedes Satellitensignal getrennt eine Diversityeffizienz von jeweils zwei Antennen.

In einer vorteilhaften Weitergestaltung der Erfindung werden beide Symboltaktsignale 18a und 18a' der Empfangspegel-Prüfeinrichtung 25a und dort der Logikschaltung 27 zugeführt. Wird eines der beiden Satellitensignale empfangsunwürdig, was durch Feststellung der Unterschreitung des Schwellensignals festgestellt ist, so wird in einer vorteilhaften Ausgestaltung der Erfindung der dadurch ausgelöste Umschaltvorgang zu einem für das empfangswürdige Empfangssignal unschädlichen Umschaltzeitpunkt initiiert. Diese Umschaltung erfolgt somit erfindungsgemäß an den Symboltakt des in diesem Augenblick empfangswürdigen Signals gebunden.

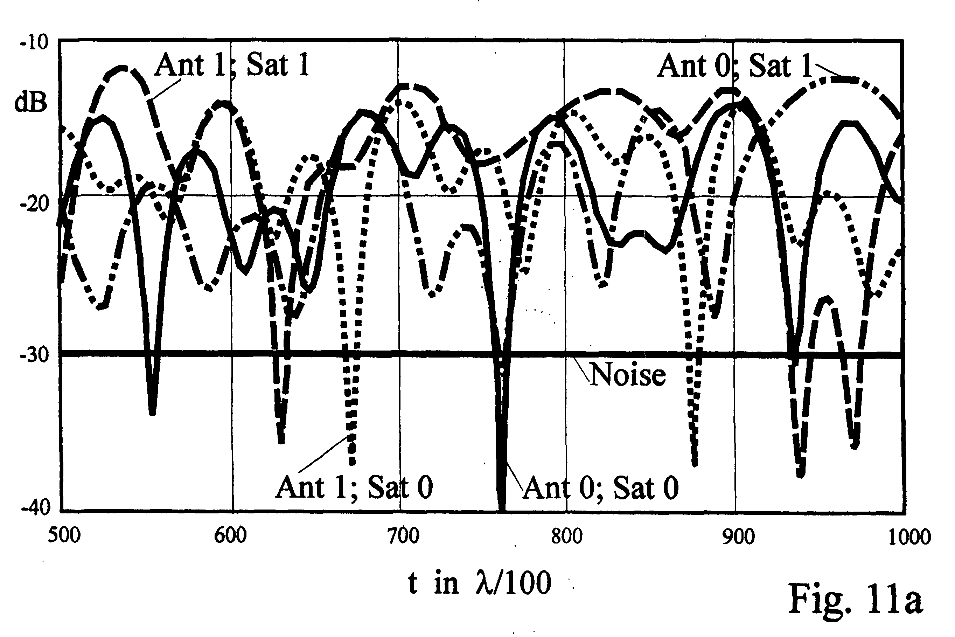

Zur Erläuterung der Funktionsweise eines derartigen Systems mit nur zwei Antennen sind in Fig. 11a vier Empfangssignale im Rayleigh-Empfangsfeld über der Wegstrecke aufgetragen. Hiervon sind die mit 0 und 1 indizierten Kurvenverläufe die Empfangssignale einer mit 0 bezeichneten Antenne von einem mit 0 und einem mit 1 bezeichneten Satelliten. Entsprechend stellen die mit 2 und 3 indizierten Kurvenverläufe Empfangssignale einer mit 1 bezeichneten Antenne von dem mit 0 und dem mit 1 bezeichneten Satelliten. Bei entsprechender Antennenanordnung sind die von einem Satelliten ausgesendeten Empfangssignale beider Antennen voneinander dekorreliert. Aufgrund der unterschiedlichen Ausbreitungswege sind auch die Pegelverläufe der beiden Satellitensignale einer Empfangsantenne jeweils dekorreliert. Somit sind alle in Fig. 11a dargestellten Pegelverläufe dekorreliert und die Unterschreitungen des für die sichere Symbolidentifikation notwendigen Mindestempfangspegels (Noise in Fig.11a) erfolgen weitgehend unabhängig voneinander.

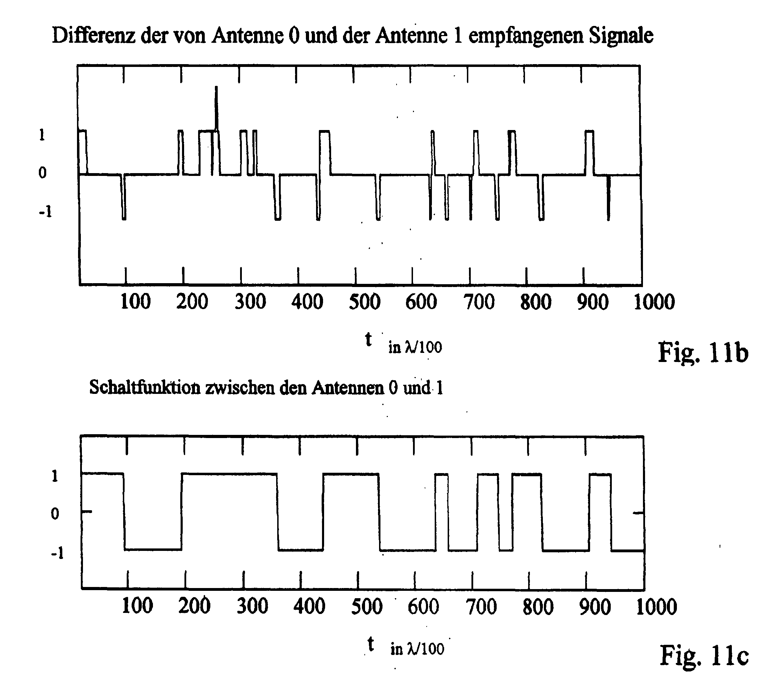

Subtrahiert man die Anzahl der mit der Antenne 1 erhaltenen empfangswürdigen Satellitenempfangssignale von der entsprechenden Anzahl der mit der Antenne 0 erhaltenen empfangswürdigen Satellitenempfangssignale, dann ergibt sich für diese Differenz der in Fig.11b dargestellte Verlauf über dem Weg. Ist die Logikschaltung 27 z.B. derart ausgebildet, dass sie an Stellen positiver Differenzwerte Antenne 0, an Stellen negativer Differenzwerte Antenne 1 auswählt, jedoch bei verschwindender Differenz keine Weiterschaltung der logischen Schalteinrichtung 2a veranlasst wird, dann ergibt sich der in Fig.11c dargestellte Verlauf der angeschalteten Antenne über dem Weg, wobei die logische 1 die Anschaltung von Antenne 0 und die logische -1 die Anschaltung von Antenne 1 kennzeichnet. Ist $p_s$ die Wahrscheinlichkeit für die Unterschreitung des notwendigen Mindestempfangspegels eines Satellitenempfangssignals mit einer Einzelantenne, dann ergibt sich bei der gefundenen Diversityeffizienz von n = 2 für jedes Signal eine wesentlich kleinere Wahrscheinlichkeit für die Unterschreitung des notwendigen Mindestempfangspegels im Diversitybetrieb von $p_d = p_s{}^n = p_s{}^2$.

In einer weiteren vorteilhaften Ausgestaltung der Erfindung werden mehr als zwei Empfangssignale, welche in zueinander nahegelegenen Frequenzbändern ausgestrahlt werden, über nur eine Hochfrequenzleitung zwischen der Antennenanordnung 20 und dem Empfänger 3a' geleitet. Die Verzweigung der Signale auf die verschiedenen, den Frequenzbändern zugeordneten HF-ZF-Teilen 42a, 42a',42b erfolgt vorteilhafter Weise im Inneren des Empfängers 3. Eine derartige Anordnung kann z.B. bei einem Satellitenrundfunksystem mit terrestrischer Zusatzversorgung - wie dem System SDARS im Frequenzbereich um 2,33 GHz - angewandt werden. Bei einem derartigen Antennendiversitysystem enthält die Antennenanordnung 20 lediglich eine logische Schalteinrichtung 2 mit einer ihr zugeordneten Empfangspegelprüfeinrichtung 25. Letzterer werden sowohl alle den verschiedenen Frequenzbändern zugeordneten Symboltaktsignale 18a, 18a' und 18b als auch die Empfangspegel 30a, 30a' und 30b zugeleitet. In letzterer sind der Pegelkomparator und eine Logikschaltung 27 mit Speicher enthalten.

Ein besonders kleiner Aufwand an Hochfrequenzleitungen ergibt sich mit einer derartigen Anlage dann, wenn eine Antennenanordnung 20 auf eng begrenztem Raum auf dem Fahrzeug gestaltet wird, so dass die Zuleitungen zwischen den die verschiedenen Antennensignale liefernden Toren zur logischen Schalteinrichtung 2 möglichst kurz sind. Solche Anordnungen sind beispielhaft in den Figuren 7 bis 10b beschrieben. Mit Hilfe des in der Logikschaltung 27 vorhandenen Gedächtnisses kann anhand sequentiell aufeinanderfolgender Schaltstellungen der logischen Schalteinrichtung 2 die Empfangswürdigkeit sämtlicher empfangener Signale - der beiden Satellitensignale und des terrestrischen Signals - geprüft werden und zu jedem Zeitpunkt die Schaltstellung derjenigen logischen Schalteinrichtung 2 eingestellt werden, bei der sich die größte Zahl aus den drei zu empfangenden Signalen empfangswürdig ergibt. Auf diese Weise stellt sich das System dynamisch auf die sich während der Fahrt laufend veränderliche Empfangssituation ein. Somit kann bei den eingesetzten Antennen auf eine akribische Einhaltung der Anforderungen an das Richtdiagramm einer Antenne ohne Antennendiversity für diesen Rundfunk verzichtet werden.

**Liste der Bezeichnungen**

1          Antennenanlage

| 2 | logische Schalteinrichtung |
|---|---|
| 3 | Empfänger |
| 4a,4b,4c.. | Antennenteile |
| 5 | Empfangssignal |
| 5a | abgeleitetes Empfangssignal |
| 6 | Pegelschwellwertgeber |
| 7 | gesamte Prüfzeit |
| 8 | Prüfzyklus-Zeitabstand $T_z$ |
| 9 | sektorales Richtdiagramm |
| 10 | Pegelkomparator |
| 11 | Pegelprüfzeit |
| 12 | Symbolgruppendauer $T_{sg}$ |
| 13 | Pegelprüfdauer $T_p$ |
| 14 | Symbolzeit Ts bzw. FDM-Symboldauer |
| 15 | Unterträger |
| 16 | Frequenzabstand der Unterträger $\Delta f_c$ |
| 17 | FDM-Symboldauer $T_{sf}$ |
| 18 | Symboltaktsignal |
| 19 | Bandbreite B = N*$\Delta$fc |
| 20 | Antennenanordnung |
| 21 | Antennenanschlussstelle |
| 22 | Hauptrichtung |
| 23 | Umschaltsignal |
| 24 | Umschaltzeit |
| 25 | Empfangspegel-Prüfeinrichtung |
| 26 | Bandpass(filter) |
| 27 | Logikschaltung |
| 30 | Empfangspegel |
| 31 | triggerbarer Pulsgenerator |
| 32 | Ablaufsteuerung |
| 33 | Takterzeugung für Antennenumschaltung |
| 34 | Adressierbare Antennenumschaltung |
| 35 | adressierbarer Speicher |
| 36 | Empfangssignalpegelindikator |
| 37 | Maximalsignalpegel-Schaltstellung Smax |
| 38 | Schaltdiode |
| 39 | Blindelement |
| 41 | HF-Antennenverstärker |
| 42 | HF-ZF-Teil |
| 43 | Zeitglied |
| 5.8 | wannenartige Vertiefung |
| 62 | Zusammenschaltnetzwerk |
| 63 | schräge Wannenwände |
| 64 | Wannenboden |
| | |
| A1,A2,A3,... | Einzelantennen |
| B | HF-Kanalbandbreite B = N*$\Delta f_c$ |
| S1,S2,S3.. | diskret verfügbare Schaltstellungen |
| $\lambda$ | Wellenlänge, Freiraumwellenlänge |
| R | Anzahl der Pegelprüfungen |
| $T_{sq}$ | QPSK-Symboldauer |
| $N_c$ | Zahl der Unterträger |
| s | Fahrstrecke |
| $T_g$ | Guard-Zeit |
| f | Trägerfrequenz |

**Patentansprüche**

1. Diversity-Empfangsanlage für Fahrzeuge, bestehend aus einem Empfänger und einer Antennenanordnung, deren Empfangssignal dem Empfänger zugeführt ist, wobei die Antennenanordnung (20) als eine Antennenanlage (1), bestehend aus mehreren Einzelantennen (A1, A2, A3,..) oder/und aus mehreren Antennenteilen (4a, 4b, 4c..), gestaltet ist und eine steuerbare logische Schalteinrichtung (2) vorhanden ist und die Einzelantennen (A1, A2, A3,..) oder/und die mehreren Antennenteile (4a, 4b, 4c..) derart gestaltet und am Fahrzeug positioniert sind, dass bei diskret verfügbaren unterschiedlichen Schaltstellungen (S1, S2, S3...) der steuerbaren logischen Schalteinrichtung (2) an der Antennenanschlussstelle (21) diversitätsmäßig unterschiedliche Empfangssignale (5) gegeben sind, und dass eine Empfangspegel-Prüfeinrichtung (25) zur vergleichenden Feststellung der im HF-Kanal enthaltenen - unterschiedlichen Empfangssignalen (5) entsprechenden - Empfangspegel vorhanden ist,
wobei weiterhin
die Diversity-Empfangsanlage für den Empfang von, mit - im Symboltakt aufeinanderfolgend gesendeten - digitalen Symbolen modulierten, terrestrischen und/oder Satelliten-Funksignalen im Frequenzbereich oberhalb 1 GHz gestaltet ist und die Empfangspegel-Prüfeinrichtung (25) zur vergleichenden Feststellung der im HF-Kanal mit der HF-Kanalbandbreite B des Datenstroms enthaltenen Empfangspegel derart gestaltet ist, dass, initiiert durch den im Empfänger (3) generierten Symboltakt (18) und während der simultan stattfindenden Symbolidentifikation des empfangenen Datenstroms, der Empfangspegel jeweils innerhalb der möglichst kurzen Pegelprüfdauer $T_p$ (14) $\approx$ 1/B festgestellt ist, und daß durch mehrfache aufeinander folgende vergleichende Pegelprüfungen in einem Pegelkomparator (10) mit Hilfe von entsprechend erzeugten Umschaltsignalen (23), die der logischen Schalteinrichtung (2) nacheinander zugeführt sind, nach Durchlaufen eines Prüfzyklus ein günstiges Empfangssignal (5) ausgewählt ist, und daß der Prüfzyklus durch die Empfangspegel-Prüfeinrichtung (25) in kurzen Prüfzyklus-Zeitabständen $T_z$ wiederholend initiiert ist, derart, dass innerhalb der durchfahrenen Wegstrecke von einer halben Wellenlänge des hochfrequenten Trägers die Einstellung eines günstigen Empfangssignals (5) in hinreichender Anzahl, mindestens jedoch fünfmal, aktualisiert ist.

2. Empfangsanlage nach Anspruch 1
**dadurch gekennzeichnet dass**
bei diskret verfügbaren unterschiedlichen Schaltstellungen (S1, S2, S3...) der steuerbaren logischen Schalteinrichtung (2) an der Antennenanschlussstelle (21) ein diversitätsmäßig günstiges Empfangssignal (5) für den Empfang der zirkular bzw. der linear polarisierten Wellen vorliegt.

3. Empfangsanlage nach Anspruch 2 für digital modulierte COFDM-Funksignale mit $N_c$>>1 Unterträgern (15) im Frequenzabstand $\Delta f_c$ (16) mit M-facher PSK-Modulation und der FDM-Symboldauer $T_{af} \approx 1/\Delta f_c$ (17) zur parallelen Phasenidentifikation der $N_c$ Unterträger (15)
**dadurch gekennzeichnet, dass**
die vergleichende Pegelprüfung des diversitätsmäßig günstigen Empfangssignals (5) über die gesamte HF-Kanalbandbreite B = $N_c$*$\Delta f_c$ (19) aller $N_c$ Unterträger zusammen gegeben ist und die Pegelprüfdauer $T_p$ (11) etwa 1/B = $1/(\Delta f_c$*$N_c)$ und somit angenähert um die Anzahl $N_c$ der vorhandenen Unterträger (15) kleiner gewählt ist als die FDM-Symboldauer $T_{sf} \approx 1/\Delta f_c$ (17), wodurch bei R innerhalb eines Prüfzyklus in zeitlich aufeinander folgenden zu prüfenden Empfangssignale (5) nur der für die Symbolidentifikation unbedeutsame Zeitanteil $(R/N_c)$*$T_{sf}$ für die Pegelprüfung beansprucht ist und der gesamte Prüfzyklus vorzugsweise jeweils am Anfang oder am Ende und vorzugsweise in jeder FDM-Symboldauer $T_{sf}$ des Datenstroms initiiert ist.

4. Empfangsanlage nach Anspruch 2 für digital modulierte Funksignale mit nur einem Hochfrequenzträger nach dem M-PSK-Verfahren mit zeitlich seriell gesendeten Symbolen der QPSK-Symboldauer $T_{sp} \approx 1/B$ im Frequenzbereich oberhalb 1 GHz,
**dadurch gekennzeichnet, dass**
in der Empfangspegel-Prüfeinrichtung (25) die Pegelprüfdauer $T_p$ (11) etwa gleich der QPSK-Symboldauer $T_{sp} \approx 1/B$ gewählt ist und das Umschaltsignal (23) der Empfangspegel-Prüfeinrichtung (25) der logischen Schalteinrichtung (2) zugeführt ist, durch welches synchron mit dem im Empfänger (3) generierten Symboltakt (18) durch mehrfache, vorzugsweise während des Empfangs aufeinander folgender Symbole durchgeführte vergleichende Pegelprüfungen in einem Pegelkomparator (10) für die Identifikation der verbleibenden Symbole der einem Prüfzyklus-Zeitabstand $T_z$ (8) zugeordneten Symbolgruppe von $N_z$ Symbolen ein möglichst günstiges Empfangssignal eingestellt ist.

5. Empfangsanlage nach Anspruch 3 mit COFDM-Funksignalen bei der Frequenz von ca. 2,3 GHz mit $N_c$=1000 Unterträgem (15) im Frequenzabstand $\Delta f_c$= 4 kHz (16) mit 4PSK-Modulation und der FDM-Symboldauer $T_{sf} \approx 1/\Delta f_c$ = 250 $\mu$sec (17) zur parallelen Phasenidenüfikation der $N_c$ = 1000 Unterträger (15)

**dadurch gekennzeichnet, dass**
die vergleichende Pegelprüfung des diversitätsmäßig günstigen Empfangssignals (5) über die gesamte HF-Kanalbandbreite $B = N_c * \Delta f_c = 4$ MHz (19) aller $N_c = 1000$ Unterträger zusammen gegeben ist und die Pegelprüfdauer $T_p$ (11) etwa $1/B = 1/(\Delta f_c * N_c) = 0,25$ μsec und somit angenähert um die Anzahl $N_c = 1000$ der vorhandenen Unterträger (15) kleiner gewählt ist als die FDM-Symboldauer $T_{af} \approx 1/\Delta f_c = 250$ μsec (17), wodurch bei bis zu $R = 10$ innerhalb eines Prüfzyklus' zu prüfenden sektoralen Richtdiagrammen (9) die für die Symbolidentifikation zur Verfügung stehende Zeit nur um den technisch unbedeutsam kleinen Zeitanteil von ca. $(R/N_c) * T_{sf} = 2,5$ μsec bzw. zusammen mit Umschaltdauern (24) von ca. 3μsec verkleinert ist und aufgrund der FDM-Symboldauer $T_{sf} \approx 1/\Delta f_c = 250$ μsec bei einer Fahrgeschwindigkeit von 100 km/h pro $\lambda/20$ gefahrene Wegstrecke ein vollständiger Prüfzyklus zur Auswahl eines günstigen Empfangssignals (5) gegeben ist.

6. Empfangsanlage nach Anspruch 4 für den Empfang von Funksignalen nach dem QPSK-Verfahren mit einem Hochfrequenzträger der Frequenz von ca. 2,3 GHz zur zeitlich seriellen Phasenidentifikation von gesendeten Symbolen der jeweiligen Symboldauerlänge $T_{sp} \approx 1/B$
   **dadurch gekennzeichnet, dass**
   die vergleichende Pegelprüfung des diversitätsmäßig günstigen Empfangssignals (5) über die HF-Kanalbandbreite $B \approx 1/T_{sp} = 4$ MHz (19) gegeben ist und die Pegelprüfdauer $T_p$ (11) etwa $1/B \approx T_{sp} \approx 0,25$ μsec und der Prüfzyklus-Zeitabstand $T_z$ mit $N_2$ zugehörenden Symbolen derart gewählt ist, dass $T_z \approx 250$μsec $\approx 1000$ Symbolzeitlängen $T_{sp}$ gewählt ist, wodurch nach bis zu ca. $R = 10$ aufeinander folgenden jeweils zeitgleich mit der Symbolidentifikation vergleichend zu prüfenden Empfangssignalen (5) für den Empfang der übrigen ca. $N_z - R \approx 990$ einer Symbolgruppe zugehörenden Symbole ein günstiges Empfangssignal (5) für die optimale Symbolidentifikation eingestellt ist.

7. Empfangsanlage nach Ansprüchen 1 bis 6 für den zur Verbesserung der Übertragungssicherheit gleichzeitigen und koordinierten Empfang von digital modulierten Satellitenfunksignalen nach dem M-PSK-Verfahren und digital modulierten nach dem COFDM-Verfahren von terrestrischen Funkstellen ausgestrahlten Funksignalen in benachbarten Hochfrequenzbändern der gleichen HF-Kanalbandbreite B jeweils desselben aber durch Laufzeit versetzten Signalinhalts mit einem Empfänger mit für beide Funkdienste getrennten Empfangszweigen nach dem Überlagerungsprinzip und getrennt verfügbaren Zwischenfrequenzsignalen
   **dadurch gekennzeichnet, dass**
   für jeden Empfangszweig eine Empfängspegel-Prüfeinrichtung (25a, 25b), welcher jeweils der Symboltakt (18a, 18b) des zugehörigen Funkdienstes zugeführt ist und in der Antennenanlage (1) für beide Funkdienste eine steuerbare logische Schalteinrichtung (2a, 2b) und eine Antennenanschlussstelle (21a, 21b) vorhanden sind und im Empfanger während einer FDM-Symboldauer $T_{sf}$ des COFDM-Signals aus der parallel erfolgten Datenübertragung über den terrestrischen Funkkanal und während einer gleich langen Symbolgruppendauer $T_{sg}$ des M-PSK-Signals aus der seriell erfolgten Datenübertragung über den Satellitenfunkkanal jeweils Datenmengen gleich großen Inhalts übertragen und im Empfänger zu einer Nachricht zusammengefasst sind und die Prüfzyklus-Zeitabstände $T_z$ im terrestrischen Empfangszweig gleich der FDM-Symboldauer $T_{sf}$ des COFDM-Signals und im Satellitenempfangszweig gleich der Symbolgruppendauer $T_{sg}$ des M-PSK-Signals gewählt sind, so dass ein günstiges Empfangssignal (5) für jeden Funkdienst voneinander getrennt ausgewählt sind.

8. Empfangsanlage nach Ansprüchen 1 bis 7 für den zur Verbesserung der Übertragungssicherheit gleichzeitigen und koordinierten Empfang von digital modulierten Satellitenfunksignalen eines ersten Satelliten nach dem M-PSK-Verfahren und von digital modulierten Satellitenfunksignalen eines zweiten Satelliten nach dem M-PSK-Verfahren und von digital modulierten nach dem COFDM-Verfahren von terrestrischen Funkstellen ausgestrahlten Funksignalen in benachbarten Hochfrequenzbändern der gleichen HF-Kanalbandbreite B jeweils desselben, aber durch Laufzeiten versetzten Signalinhalts mit einem Empfänger mit für alle drei Funkdienste jeweils getrennten Empfangszweigen nach dem Überlagerungsprinzip und getrennt verfügbaren Zwischenfrequenzsignalen
   **dadurch gekennzeichnet, dass**
   für jeden Empfangszweig eine Empfangspegel-Prüfeinrichtung (25a, 25a', 25b), welcher jeweils der Symboltakt (18a, 18a',18b) des zugehörigen Funkdienstes zugeführt ist und in der Antennenanlage (1) für alle drei Funkdienste eine steuerbare logische Schalteinrichtung (2a, 2a', 2b) und eine Antennenanschlussstelle (21a, 21a', 21b) vorhanden sind und im Empfänger während einer FDM-Symboldauer $T_{sf}$ des COFDM-Signals aus der parallel erfolgten Datenübertragung über den terrestrischen Funkkanal und während einer gleich langen Symbolgruppendauer $T_{sg}$ der M-PSK-Signale aus der seriell erfolgten Datenübertragung über die beiden Satellitenfunkkanäle jeweils Datenmengen gleich großen Inhalts übertragen und im Empfänger zu einer Nachricht zusammengefasst sind und die Prüfzyklus-Zeitabstände $T_z$ im terrestrischen Empfangszweig gleich der FDM-Symboldauer $T_{sf}$ des COFDM-Signals und in den Satellitenempfangszweigen gleich der Symbolgruppendauer $T_{sg}$ der M-PSK-Signale gewählt sind, so dass diversitätsmäßig günstige Empfangssignale (5) für jeden Funkdienst voneinander getrennt ausgewählt sind.

9. Empfangsanlage nach Anspruch 1 bis 8
**dadurch gekennzeichnet, dass**
im Empfänger (3) ein dem bzw. jedem der Frequenzumsetzer nachgeschalteter Bandpass (26) mit einer der HF-Kanalbandbreite B gleichen ZF-Bandbreite in der Zwischenfrequenzebene vorhanden ist, dessen Ausgangssignal zur Feststellung der in diesem Band summarisch auftretenden Empfangsleistung einem Empfangspegelindikator (36) zugefüm ist, durch welchen der Empfangspegel (30) angezeigt ist.

10. Empfangsanlage zum Empfang von COFDM-Signalen nach den Ansprüchen 3, 5, 7 und 8
**dadurch gekennzeichnet, dass**
eine Empfangspegel-Prüfeinrichtung (25) vorhanden ist, welcher sowohl der Empfangspegel (30) als auch das im Empfänger generierte Symboltaktsignal (18) zugefiihrt ist und in der Empfangspegel-Prüfeinrichtung (25) ein triggerbarer Pulsgenerator (31) vorhanden ist, welcher vom Symboltaktsignal (18) getriggert ist und der gemäß der Anzahl R der zu prüfenden Empfangssignale (5) eine entsprechend gestaltete Pulsfolge abgibt, deren Pulsabstandszeit aus den Pegelprüfzeiten (11) plus Umschaltzeiten (24) besteht und die betreffende Pulsfolge jeweils sowohl an den Pegelkomparator (10) als auch an die logische Schalteinrichtung (2) zur sequentiellen bzw. adressierten Anschaltung der diversitätsmäßig günstigen Empfangssignale (5) geleitet ist.

11. Empfangsanlage nach einem der Ansprüche 1 bis 10
**dadurch gekennzeichnet, dass**
zum Zwecke der Selektion eines hinreichend leistungsstarken Empfangssignals (5) für die Identifikation der bei COFDM-Signalen während einer FDM-Symboldauer $T_{sf}$ (17) gesendeten Bits bzw. für die Identifikation der bei M-PSK-Signalen während einer Symbolgruppendauer $T_{sg}$ (12) gesendeten Bits in der Empfangspegel-Pegelprüfeinrichtung (25) eine Ablaufsteuerung (32), eine Takterzeugung für Antennenumschaltung (33) im Taktzeitabstand $\approx$ 1/B, eine sequentiell adressierbare Antennenumschaltung (34), ein Pegelschwellwertgeber (6) und ein Pegelkomparator (10) vorhanden sind und die sequentiell adressierbare Antennenumschaltung (34) solange weitergeschaltet ist, bis der Empfangspegel (30) den durch den Pegelschwellwertgeber (6) vorgegebenen Pegel mindestens erreicht.

12. Empfangsanlage nach einem der Ansprüche 3, 5, 7, 8 und 10
**dadurch gekennzeichnet, dass**
zum Zwecke der Selektion des leistungsstärksten Empfangssignals (5) für die Identifikation der während einer FDM-Symboldauer $T_{sf}$ (17) gesendeten $N_c*ld(M)$ bits in der Empfangspegel-Prüfeinrichtung (25) eine Ablaufsteuerung (32), eine Takterzeugung für Antennenumschaltung (33), eine sequentiell adressierbare Antennenumschaltung (34), ein adressierbarer Speicher (35) und ein Pegelkomparator (10) vorhanden sind.

13. Empfangsanlage nach Anspruch 1 bis 12
**dadurch gekennzeichnet, dass**
die Empfangspegel-Prüfeinrichtung (25) im Empfänger (3) vorhanden ist und die Umschaltsignale (23) an die logische Schalteinrichtung (2) der Antennenanordnung (20) geführt sind.

14. Empfangsanlage nach Anspruch 1 bis 12
**dadurch gekennzeichnet, dass**
die Empfangspegel-Prüfeinrichtung (25) außerhalb des Empfängers (3) in der räumlichen Nähe der logischen Schalteinrichtung (2) angeordnet ist und ihr sowohl das Symboltaktsignal (18) als auch der Empfangspegel (30) über die zum Empfänger (3) führende Hochfrequenzleitung zugeführt ist.

15. Empfangsanlage nach Anspruch 1 bis 14
**dadurch gekennzeichnet, dass**
die bei unterschiedlichen aus einer Reihe von zu prüfenden Schaltstellungen (S1, S2...) der logischen Schalteinrichtung (2) auftretenden Pegel des aus dem dem Empfänger zugeführten Empfangssignal (5) abgeleiteten Empfangssignals (5a) in einer Empfangspegel-Prüfeinrichtung (25) vergleichend erfasst sind in der Weise, dass die dem günstigsten Empfangssignal (5) zugeordnete Maximalpegel-Schaltstellung ($S_{max}$) am Ende der gesamten Pegelprüfdauer (7) für die restliche Zeit der Symboldauer eingestellt ist.

16. Empfangsanlage nach Anspruch 1 bis 15
**dadurch gekennzeichnet, dass**
eine erste Einzelantenne (A1) mit einem vorgeschriebenen Richtdiagramm über ebener Platte vorhanden ist, deren Richtdiagramm bei Fahrzeugmontage durch Einzüge deformiert ist und eine oder mehrere, dezentral am Fahrzeug angebrachte Einzelantenne (A2) bzw. Einzelantennen (A2, A3, A4, A5) diversitätsmäßig günstige Empfangssignale (5) liefern und die Empfangssignale (5) aller Einzelantennen (A1, A2, A3, A4, A5) der logischen Schalteinrichtung (2) zugeführt sind.

**17.** Empfangsanlage nach Anspruch 1 bis 15

**dadurch gekennzeichnet, dass**

die Antennenanlage (1) aus mehreren Einzelantennen (A1, A2, A3, ...) und mehreren Antennenteilen (4a, 4b, 4c,... 4g) besteht, welche zusammen im Wesentlichen eine aus zwei Rahmenstrukturen gebildete gekreuzte Rahmenanordnung bilden, in welcher Blindelemente (39) und Schaltdioden (38) enthalten sind, wobei mit bestimmten diskret verfügbaren Schaltstellungen (S1, S2, S3, ...) der Schaltdioden (38) mit Hilfe der Blindelemente (39) ein zirkular polarisiertes, dem vorgeschriebenen Richtdiagramm möglichst nahe kommendes Richtdiagramm (9) eingestellt ist und mit anderen diskret verfügbaren Schaltstellungen (S1, S2, S3, ..) der Schaltdioden (38) mehrere sektorale Richtdiagramme (9) wechselweise zur Auffüllung der Hüllfläche eingestellt sind.

**18.** Empfangsanlage nach Anspruch 1 bis 15

**dadurch gekennzeichnet, dass**

in der elektrisch leitenden Fahrzeugkarosserie eine im wesentlichen rechteckförmige bzw. runde wannenartige Vertiefung (58) mit schrägen Wannenwänden (63) ausgeformt ist und dass zur Ausbildung eines für die Steilstrahlung geeigneten sektoralen Richtdiagramms (9) im Zentrum der Wanne auf deren Wannenboden (64) eine Patch-Antenne (A1) angebracht ist und zur Ausbildung weiterer, die Winkelbereiche niedriger Elevation abdeckender sektoraler Richtdiagramme (9) an den schrägen Wannenwänden (63) weitere Patch-Antennen (A2, A3, A4...) angebracht sind.

**19.** Empfangsanlage nach Anspruch 18 in Verbindung mit Anspruch 17

**dadurch gekennzeichnet, dass**

anstelle der im Zentrum der Wanne angebrachten Patch-Antenne (A1) eine Antenne vom Typ der im Anspruch 17 beschriebenen Antenne mit einem, dem vorgeschriebenen Richtdiagramm möglichst nahe kommenden Richtdiagramm (9) vorhanden ist.

**20.** Empfangsanlage nach Anspruch 1 bis 10 in Verbindung mit Ansprüchen 18 und 19

**dadurch gekennzeichnet, dass**

wie in den Ansprüchen 18 und 19 eine wannenartige Vertiefung (58) vorhanden ist und im Zentrum der Wanne im geeigneten Abstand vom Wannenboden (64) ein aus den Antennenteilen (4a, 4b) gebildeter gekreuzter Horizontaldipol für zirkular polarisierte Steilstrahlung vorhanden ist und zwei unter 90 Grad zueinander angeordnete aus den vertikalen Antennenteilen (4c, 4d, 4e, 4f und 4g, 4h, 4i, 4k) gebildete Gruppenantennen mit jeweils einem Zusammenschaltnetzwerk (62) gebildet sind, welche zur Abdeckung der Strahlung bei niedrigen Elevationswinkeln die nötigen sektoralen Richtdiagramme (9) in beiden Richtungen ihrer Ausdehnung als Einzelantennen (A2, A3 und A4, A5) ermöglichen.

**21.** Empfangsanlage nach Anspruch 20

**dadurch gekennzeichnet, dass**

zur besseren azimutalen Abdeckung der Strahlung bei niedrigen Elevationswinkeln eine Vielzahl von Gruppenantennen mit den Einzelantennen (A2 bis A9) in gleichen azimutalen Winkelabständen vorhanden sind.

**22.** Empfangsanlage nach Anspruch 19

**dadurch gekennzeichnet, dass**

anstelle der an den schrägen Wannenwänden (63) angebrachten Patch-Antennen horizontal polarisierte Gruppenantennen (A2 bis A9) angebracht sind derart, dass jede Gruppenantenne in geeignetem Abstand vor der schrägen Wannenwand (63) positioniert ist und die Zahl der Antennenteile (4g, 4h) einer Einzelantenne (A2) hinreichend groß gewählt ist, damit der Effekt der Abschattung durch die jeweils gegenüberliegende schräge Wannenwand (63) aufgehoben bzw. überkompensiert wird.

**23.** Empfangsanlage nach Anspruch 22

**dadurch gekennzeichnet, dass**

die Strahlung bei niedrigen Elevationswinkeln **dadurch** optimiert ist, dass die Gruppenantennen in der Ebene der Karosscrieoberfläche im Abstand von etwa 1/4-Wellenlänge vor der schrägen Wannenwand (63) angeordnet sind und die Neigung der schrägen Wannenwände (63) in diesem Sinne optimiert ist.

**24.** Empfangsanlage nach Anspruch 8

**dadurch gekennzeichnet, dass**

zur Übertragung der beiden Satellitenfunksignale von der Antennenanordnung (20) zu den Satelliten-Empfängern (3a und 3a') eine gemeinsame Hochfrequenzleitung mit Signalverzweigung am Eingang des Empfängers (3) vorhanden ist und in der Antennenanordnung (20) nur eine logische Schalteinrichtung (2a) zum Empfang der Satellitenfunksignale und eine Empfangspegel-Prüfeinrichtung (25) vorhanden sind und der Empfangspegel-Prüfeinrichtung (25) sowohl beide den Satellitenfunksignalen zugeordneten Empfangspegel (30a, 30a') zur getrennten Pegelprüfung als auch die beiden Symboltaktsignale (18a, 18a') zugeleitet sind und eine Logikschaltung (27) mit Gedächtnis vorhanden ist, welche derart gestaltet ist, dass zu jedem Zeitpunkt diejenige Schaltstellung der logischen Schalteinrichtung (2a) eingestellt ist, mit welcher die größte Anzahl der für sichere Symbolidentifikation empfangenen Satellitensignale gegeben ist.

**25.** Empfangsanlage nach Anspruch 24
**dadurch gekennzeichnet, dass**
die Logikschaltung (27) mit Gedächtnis derart gestaltet ist, dass bei Unterschreitung des Mindestpegels zur sicheren Symbolidentifikation eines der beiden Satellitenfunksignale zur Vermeidung von Umschaltstörungen auf dem empfangswürdigen anderen Satellitenfunksignal die Weiterschaltung der logischen Schalteinrichtung (2a) auf ein anderes Antennensignal mit Hilfe des Symboltakts geeignet zu einem für das empfangswürdige Empfangssignal im Wesentlichen unschädlichen Umschaltzeitpunkt initüert ist.

**26.** Empfangsanlage nach Anspruch 24 und 25
**dadurch gekennzeichnet, dass**
sowohl für die Übertragung der beiden Satellitenfunksignale als auch des terrestrischen Signals von der Antennenanordnung (20) zu den Empfängern (3a, 3a' und 3b) der Sateltitensignale und des terrestrischen Signals eine gemeinsame Hochfrequenzleitung mit Signalverzweigung am Eingang des Empfängers (3) vorhanden ist und in der Antennenanordnung (20) nur eine logische Schalteinrichtung (2a) zum Empfang sowohl der Satellitenfunksignale als auch der terrestrischen Funksignale und eine Empfangspegel-Prüfeinrichtuhg (25) vorhanden sind und der Empfangspegel-Prüfeinrichtung (25) sowohl die den Satellitenfunksignalen zugeordneten Empfangspegel (30a, 30a') und der den terrestrischen Funksignalen zugeordneten Empfangspegel (30b) zur getrennten Pegelprüfung als auch alle Symboltaktsignale (18a, 18a', 18b) zugeleitet sind und die Logikschaltung (27) mit Gedächtnis derart gestaltet ist, dass durch sequentielles Weiterschalten der logischen Schalteinrichtung (2a) zu jedem Zeitpunkt diejenige Schaltstellung der logischen Schalteinrichtung (2a) suchend eingestellt ist, mit welcher die größte Anzahl der für sichere Symbolidentifikation empfangenen Signale gegeben ist.

**Claims**

**1.** Diversity receiving equipment for vehicles, consisting of a receiver and an antenna configuration, the incoming signal from which is supplied to the receiver, whereby the antenna configuration (20) is arranged as an antenna system (1), consisting of several separate antennae (A1, A2, A3...) and/or of several antenna parts (4a, 4b, 4c...), and a controllable logic switching device (2) is present and the separate antennae (A1, A2, A3 ...) and/or the several the antenna parts (4a, 4b, 4c...) are formed and positioned on the vehicle in such a manner that at discretely available different switching positions (S1, S2, S3...) of the controllable logic switching device (2) diverse different incoming signals (5) are provided to the antenna connections (21) and that a received level testing facility (25) is available for comparative determination of the received level - corresponding to the different incoming signals (5) - present in the HF channel,
where, in addition,
the diversity receiving equipment is designed for the reception of terrestrial and/or satellite communication service signals in the frequency range above 1 GHz, modulated with digital symbols sent successively in the symbol clock, and the received level testing facility (25) for the comparative determination of the received level obtained in the HF channel with the HF channel bandwidth B of the data stream is designed in such a way that, initiated by the symbol clock (18) generated in the receiver (3) and, while the symbol identification of the incoming data stream is taking place simultaneously, received levels are each determined within as short a level-testing period $T_p$ (14) $\approx$ 1/B as possible and that, by repeated sequential comparative level checks in a level comparator (10), a favourable incoming signal (5) is selected with the aid of correspondingly produced switching signals (23) which, after going through a test cycle, are sent in sequence to the logic switching device (2) and that the test cycle is re-initiated by the received level testing facility (25) in short test cycle time intervals $T_z$, in such a manner that, within a stretch of road being traversed equivalent to half a wavelength of the high-frequency carrier, the selection of a favourable incoming signal (5) is updated a sufficient number of times, but at least five.

2. Receiving equipment in accordance with Claim 1,
**characterised in that**
a satisfactory incoming diversity signal (5) is provided for the reception of circularly and/or linearly polarised waves by discretely available different switching positions (S1, S2, S3...) of the controllable logic switching device (2) on the antenna connection (21).

3. Receiving equipment in accordance with Claim 2 for digitally modulated COFDM signals with $N_c \gg 1$ subcarriers (15) at a frequency separation of $\Delta f_c$ (16) with multiple PSK modulation and FDM symbol duration $T_{sf} \approx 1/\Delta f_c$ (17) for the parallel phase identification of the $N_c$ subcarrier (15),
**characterised in that**
the comparative level testing of the diversity signal (5) satisfactorily received is provided over the entire HF channel bandwidth $B = N_c{}^*\Delta f_c$ (19) of all $N_c$ subcarriers together and the level testing period $T_p$ (11) is about $1/B = 1/(\Delta f_c{}^*N_c)$ and thus selected to be smaller than the FDM symbol duration $T_{sf} \approx 1/\Delta f_c$ (17) by approximately the number $N_c$ of the existing subcarriers (15), where with R incoming signals (5) to be tested sequentially within a test cycle, only the insignificant time $(R/N_c)^* T_{sf}$ required for the symbol identification is required for the level test, and the whole test cycle is initiated preferably at the beginning or at the end and preferably in each FDM symbol duration $T_{sf}$ of the data stream.

4. Receiving equipment in accordance with Claim 2 for digitally modulated radio signals with only one high-frequency carrier in accordance with the MPSK procedure with sequentially sent symbols of the QPSK symbol duration $T_{sp} \approx 1/B$ in the frequency range above 1 GHz,
**characterised in that**
the level testing period $T_p$ (11) in the received level testing facility (25) is selected to be approximately equal to the QPSK symbol duration $T_{sp} \approx 1/B$ and the switching signal (23) of the received level testing facility (25) is supplied to the logic switching device (2), by which the best possible incoming signal is set synchronously with the symbol clock (18) generated in the receiver (3) by multiple comparative level tests in a level comparator (10), preferably carried out during the reception of sequential symbols to identify the remaining symbols of a symbol group of $N_z$ symbols assigned to one test cycle time interval $T_z$ (8).

5. Receiving equipment in accordance with Claim 3 with COFDM signals at a frequency of approx. 2.3 GHz with $N_c = 1000$ subcarriers (15) at a frequency separation of $\Delta f_c = 4$ kHz (16) with 4PSK modulation and an FDM symbol duration of $T_{sf} \approx 1/\Delta f_c = 250$ μsec (17) for the parallel phase identification of the $N_c = 1000$ sub carriers (15),
**characterised in that**
the comparative level testing of the diversity signal (5) satisfactorily received is provided over the entire HF channel bandwidth $B = N_c{}^* \Delta f_c = 4$ MHz (19) of all $N_c = 1000$ subcarriers together and the level testing period $T_p$ (11) of about $1/B = 1/(\Delta f_c{}^*N_c) = 0.25$ μsec and thus selected to be smaller than the FDM symbol duration $T_{sf} \approx 1/\Delta f_c = 250$ μsec by approximately the number $N_c = 1000$ of the existing subcarriers (15), as a result of which at up to R = 10 the sector response patterns (9) to be checked within a test cycle in the time available for symbol identification is reduced by only the technically insignificantly small time of approx. $(R/N_c)^*T_{sf} = 2.5$ μsec and/or together with switching times (24) of approx. 3 μsec and because of the FDM symbol duration $T_{sf} = 1/\Delta f_c = 250$ μsec (17) at a driving speed of 100 km/h per λ/20 traversed distance a complete test cycle is available for the selection of a satisfactory received signal (5).

6. Receiving equipment in accordance with Claim 4 for the reception of radio signals by the QPSK procedure with a high-frequency carrier of a frequency of approx. 2.3 GHz for the time-shifted serial phase identification of transmitted symbols with the respective symbol duration of $T_{sp} \approx 1/B$,
**characterised in that**
the comparative level testing of the diversity signal (5) satisfactorily received is given over the HF channel bandwidth $B = 1/T_{sp} = 4$ MHz (19) and the level testing time $T_p$ (11) of about $1/B \approx T_{sp} \approx 0.25$ μsec and the test cycle separation $T_z$ with $N_z$ associated symbols is selected in such a manner that $T_z \approx 250$ μsec = 1000 symbol time lengths $T_{sp}$, whereby after up to approx R = 10 sequential incoming signals (5) to be tested at the same time in comparison with the symbol identification in each case a favourable incoming signal (5) for the optimal symbol identification is set for the reception of the remaining approx. $N_z - R \approx 990$ symbols belonging to a group of symbols.

7. Receiving equipment in accordance with Claims 1 to 6 for the improvement of the transmission reliability of simultaneous and coordinated reception of digitally modulated satellite communication service signals using the MPSK procedure and digitally modulated radio signals broadcast using COFDM from terrestrial radio stations in adjacent high-frequency bands of the same HF channel bandwidth B with the same signal content in each case but shifted by running time in a receiver with separated receiver paths for the two radio services in accordance with the superposition principle and separated available intermediate frequency signals,
**characterised in that**
for each reception path a received level testing facility (25a, 25b), to each of which the symbol clock (18a, 18b) of the associated radio service is supplied and in the antenna system (1) for both radio services a controllable logic switching device (2a, 2b) and an antenna connection point (21 a, 21b) are provided and in the receiver during a FDM symbol duration $T_{sf}$ of the COFDM signal from the data communication taking place in parallel via the terrestrial radio link and during an equally long symbol group duration $T_{sg}$ of the MPSK signal from the serial data communication via the satellite radio channel in each case data sets of equally large contents are transmitted and combined into a message in the receiver and the test cycle time intervals $T_z$ in the terrestrial receiver unit are selected to be equal to the FDM symbol duration $T_{sf}$ of the COFDM signal and in the satellite receiver unit equal to the symbol group duration $T_{sg}$ of the MPSK signal, so that satisfactory incoming signals (5) for each radio service are selected separately from each other.

8. Receiving equipment in accordance with Claims 1 to 7 for the improvement of the transmission reliability of the simultaneous coordinated reception of digitally modulated satellite communication service signals of a first satellite using the MPSK procedure and of digitally modulated satellite communication service signals of a second satellite using the MPSK-procedure and of digitally modulated COFDM radio signals broadcast from terrestrial stations in adjacent high-frequency bands of the same HF channel bandwidth B in each case the same, but time-shifted signal contents with a receiver for all three radio services with separate receiver units separated in accordance with the superposition principle and separately available intermediate frequency signals,
**characterised in that**
for each receiver unit a received level testing facility (25a, 25a', 25b), to each of which the symbol clock (18a, 18a', 18b) of the associated radio service is supplied and in the antenna system (1) a controllable logic switching device (2a, 2a', 2b) and an antenna connection point (21a, 21a', 21b) are provided for all three radio services and in the receiver during a FDM symbol duration $T_{st}$ of the COFDM signal from the data communication taking place in parallel via the terrestrial radio link and during an equally long symbol group duration $T_{sg}$ of the MPSK signals from the serial data communication via the satellite radio channel in each case data sets of equally large contents are transmitted and combined into a message in the receiver and the test cycle time intervals $T_z$ in the terrestrial receiver unit are selected to be equal to the FDM symbol duration $T_{sf}$ of the COFDM signal and in the satellite receiver unit equal to the symbol group duration $T_{sg}$ of the MPSK signal, so that satisfactory diversity incoming signals (5) for each radio service are selected separately from each other.

9. Receiving equipment in accordance with Claims 1 to 8,
**characterised in that**
the receiver (3) comprises a band-pass filter (26), connected after each and every frequency converter and with an IF bandwidth equal to the HF channel bandwidth B in the intermediate frequency level, the output signal from which is supplied to a received level indicator (36) by which the received level (30) is indicated to establish the overall receiving power arising in this band.

10. Receiving equipment in accordance with Claims 3, 5, 7 and 8 for receiving COFDM signals,
**characterised in that**
a received level testing facility (25) is present, to which both the received level (30) and the symbol clock pulse (18) generated in the receiver are supplied and in the received level testing facility (25) a triggerable pulse generator (31) is present, which is triggered by the symbol clock pulse (18) and which delivers a correspondingly formed pulse train in accordance with the number R of the incoming signals (5), the pulse separation of which consists of the level test times (11) plus switching times (24) and the relevant pulse train is fed in each case both to the level comparator (10) and to the logic switching device (2) as well as to the sequential and/or addressed connection of the satisfactory received diversity signals (5).

11. Receiving equipment in accordance with one of the Claims 1 to 10,
**characterised in that**
for the purpose of the selection of a sufficiently high powered incoming signal (5) for the identification of the bits sent with COFDM signals during a FDM symbol duration $T_{sf}$ (17) sent and/or for the identification of bits sent with MPSK signals during a symbol group duration $T_{sg}$ (12) in the received level testing facility (25) a flow control (32), a clock production for antenna change-over (33) in a cycle time separation $\approx 1/B$, a sequentially addressable antenna change-over (34), a level threshold emitter (6) and a level comparator (10) are present and the sequentially addressable antenna change-over (34) is advanced until the received level (30) reaches at least the level given by the level threshold emitter (6).

**12.** Receiving equipment in accordance with one of the Claims 3, 5, 7, 8 and 10,
**characterised in that**
for the purpose of selecting the highest performance incoming signal (5) for the identification of the $N_c$*ld(M) bits sent during an FDM symbol duration $T_{sf}$ (17), a flow control (32), a clock production for antenna change-over (33), a sequentially addressable antenna change-over (34), an addressable memory (35) and a level comparator (10) are provided in the received level testing facility (25).

**13.** Receiving equipment in accordance with Claims 1 to 12,
**characterised in that**
the received level testing facility (25) is present in the receiver (3) and the switching signals (23) are fed to the logic switching device (2) of the antenna array (20).

**14.** Receiving equipment in accordance with Claims 1 to 12,
**characterised in that**
the received level testing facility (25) is arranged outside the receiver (3) in spatial proximity to the logic switching device (2) and both the symbol clock pulse (18) and the received level (30) are supplied to it via the high-frequency line to the receiver (3).

**15.** Receiving equipment in accordance with Claims 1 to 14,
**characterised in that**
each of the different units comprising a series of switch positions (S1, S2...) within the logic switching device (2) is tested separately with the emerging signal strength levels (5a) derived from the incoming signals (5) from the receiving unit being recorded in a device (25) which determines and compares individual signal strength levels in such a manner that the maximum level switching position ($S_{max}$) assigned to the most favourable incoming signal (5) identified by the close of the total period of level assessment (7) becomes the permanent setting for the remaining period during which the symbol persists.

**16.** Receiving equipment in accordance with Claims 1 to 15,
**characterised in that**
a first individual antenna (A1) with a pre-determined directivity pattern over a flat plane is present, the directivity pattern of which is distorted on installing on a vehicle and one or more individual antenna (A2) and/or individual antennas (A2, A3, A4, A5) attached in a distributed manner on the vehicle supply favourable incoming diversity signals (5) and the incoming signals (5) from all individual antennas (A1, A2, A3, A4, A5) are supplied to the logic switching device (2).

**17.** Receiving equipment in accordance with Claims 1 to 15,
**characterised in that**
the antenna system (1) consists of several individual antennas (A1, A2, A3...) and several antenna parts (4a, 4b, 4c... 4g), which together form an essentially cruciform framework arrangement formed from two frame structures, containing dummy elements (39) and switches (38), where with certain discretely available switching positions (S1, S2, S3...) of the switches (38) with the aid of the dummy elements (39) a circularly polarised directivity pattern, as close as possible to the prescribed directivity pattern (9), is provided and with other discretely available switching positions (S1, S2, S3...) of the switches (38) several sector directivity patterns (9) are provided alternately to complete the envelope.

**18.** Receiving equipment in accordance with Claims 1 to 15,
**characterised in that**
an essentially rectangular and/or round drip-tray type recess (58) with oblique walls (63) is formed in the electrically-conducting vehicle body and that a patch antenna (A1) is attached in the centre of the tray on the tray floor (64) to form a sectional directivity pattern (9) suitable for the high-angle radiation and for the formation of other directivity patterns (9) covering the angles at lower elevations, further patch antennas (A2, A3, A4...) are attached to the sloping tray walls (63).

**19.** Receiving equipment in accordance with Claim 18 in combination with Claim 17,
**characterised in that**
in place of the patch antenna (A1), attached in the centre of the tub, an antenna of the type described in Claim 17 with a directivity pattern as close as possible to the pre-determined directivity pattern (9) is provided.

20. Receiving equipment in accordance with Claims 1 to 10 in combination with Claims 18 and 19,
**characterised in that**
as in the Claims 18 and 19 a drip-tray type recess (58) is provided and in the centre of the tray at a suitable distance from the floor of the tray (64) a crossed horizontal dipole for circular polarised steep radiation, formed by the antenna parts (4a, 4b), is provided and two array antennas arranged at less than 90 degrees to one another, each with a connecting network (62), formed from the vertical antenna parts (4c, 4d, 4e, 4f and 4g, 4h, 4i, 4k) which, to cover the radiation at low angles of elevation, enable the necessary directivity patterns (9) in both directions of their extension as individual antennas (A2, A3 and A4, A5).

21. Receiving equipment in accordance with Claim 20,
**characterised in that**
for the better azimuth cover of the radiation at low angles of elevation a multiplicity of array antennas is provided with the individual antennas (A2 to A9) in equal azimuth angle separation.

22. Receiving equipment in accordance with Claim 19,
**characterised in that**,
in place of the patch antennas attached to the diagonal tray walls (63), horizontal polarised array antennas (A2 to A9) are attached in such a manner that each array antenna is positioned at a suitable distance in front of the diagonal tray wall (63) and the number of antenna parts (4g, 4h) of an individual antenna (A2) is selected to be sufficiently large, so that the effect of the shadowing is removed and/or overcompensated by the corresponding opposite sloping tray wall (63).

23. Receiving equipment in accordance with Claim 22,
**characterised in that**
the radiation at low elevation angles is optimised by the fact that the array antennas in the plane of the body surface are arranged at a distance of approximately ¼-wavelength in front of the sloping tray wall (63) and the inclination of the sloping tray walls (63) is optimised in this sense.

24. Receiving equipment in accordance with Claim 8,
**characterised in that**
for the transmission of the two satellite communication service signals of the antenna array (20) to the satellite receivers (3a and 3a') a common high-frequency line is provided with signal bypass at the entrance of the receiver (3) and in the antenna array (20) only a logic switching device (2a) for the reception of the satellite communication service signals and a received level testing facility (25) are present and both the two received levels (30a, 30a') allocated to the satellite communication service signals are transmitted for separate level testing to the received level testing facility (25) assigned and the two symbol clock pulses (18a, 18a') and a logic circuit (27) with memory is present, which is designed in such a manner that at any time the switching position of the logic switching device (2a) which provides the greatest number of received satellite signals for safe symbol identification is given.

25. Receiving equipment in accordance with Claim 24,
**characterised in that**
the logic circuit (27) with memory is arranged in such a manner that when one of the two satellite communication service signals falls below the minimum level for safe symbol identification the switching over of the logic switching device (2a) to another antenna signal is initiated with the aid of the symbol clock at a switching time which is essentially not harmful for the receipt of the incoming signal in order to avoid switching interference to the receivable other satellite communication service signal.

26. Receiving equipment in accordance with Claims 24 and 25,
**characterised in that**
for the transmission of both the two satellite communication service signals and the terrestrial signal from the antenna array (20) to the receivers (3a, 3a' and 3b) of the satellite signals and the terrestrial signal, a common high-frequency line is present with signal bypass at the entrance to the receiver (3) and in the antenna array (20) only one logic switching device (2a) for the reception both of the satellite communication service signals and of the terrestrial radio signals and a received level testing facility (25) is present and the received level testing facility (25), both the received level (30a, 30a') assigned to the satellite communication service signals and the received level (30b) assigned to the terrestrial radio signals for separate level testing and all symbol clock pulses (18a, 18a', 18b) are conveyed and the logic switching device (27) with the memory is designed in such a way that by sequential re-switching of the logic switching device (2a) at any time that switching position of the logic switching device (2a) which provides the largest number of signals received for safe symbol identification is set by searching.

## Revendications

1. Installation de réception en diversité pour véhicules, composée d'un récepteur et d'une disposition d'antennes dont le signal de réception est transmis au récepteur, dans lequel la disposition d'antennes (20) est conçue comme une installation d'antennes (1) composée de plusieurs antennes (A1, A2, A3...) et/ou de plusieurs parties d'antenne (4a, 4b, 4c...) et il est prévu un dispositif logique contrôlable de commutation (2), et les antennes (A1, A2, A3...) et/ou les multiples parties d'antenne (4a, 4b, 4c...) sont conformées et positionnées sur le véhicule de telle manière que dans différentes positions de commutation (S1, S2, S3...) discrètes disponibles du dispositif logique contrôlable de commutation (2), il existe différents signaux de réception (5) dans le sens d'une diversité et un dispositif de contrôle du niveau de réception (25) est prévu pour constater et comparer les niveaux de réception reçus sur le canal HF et correspondant à différents signaux de réception (5), et dans lequel, en outre, l'installation de réception en diversité est conçue pour recevoir des signaux de radio terrestre et/ou par satellite modulés avec des symboles numériques émis successivement selon un débit de symboles, dans la plage de fréquences supérieure à 1 GHz, et le dispositif de contrôle du niveau de réception (25) est conçu pour constater et comparer les niveaux de signaux reçus dans le canal HF avec la bande passante B du canal HF du flux de données, de telle manière qu'avec un déclenchement par le flux de données reçu au débit de symboles (18) généré dans le récepteur (3) pendant l'identification simultanée des symboles, le niveau de réception soit constaté dans l'intervalle de contrôle du niveau le plus court possible $T_p$ (14) $\approx$ 1/B, et dans lequel, par de multiples contrôles comparatifs successifs du niveau dans un comparateur de niveau (10) à l'aide de signaux de commutation (23) générés de manière appropriée, qui sont transmis successivement au dispositif logique de commutation (2), un signal de réception (5) favorable est sélectionné après l'exécution d'un cycle de contrôle, et dans lequel le cycle de contrôle est lancé de façon répétitive par le dispositif de contrôle du niveau de réception (25) à des intervalles de cycle de contrôle $T_z$ rapprochés, de telle sorte que dans la distance parcourue d'une demi-longueur d'onde de la porteuse à haute fréquence, le réglage d'un signal de réception favorable (5) soit actualisé suffisamment souvent, mais au minimum cinq fois.

2. Installation de réception selon la revendication 1, **caractérisée en ce que** dans différentes positions de commutation (S1, S2, S3...) discrètes du dispositif logique contrôlable de commutation (2), un signal de réception (5) favorable dans le sens d'une diversité est présent au point de connexion de l'antenne (21) pour la réception des ondes en polarisation circulaire ou linéaire.

3. Installation de réception selon la revendication 2 pour des signaux radio COFDM à modulation numérique avec $N_c \gg$ 1 sous-porteuses (15) dans l'intervalle de fréquence $\Delta f_c$ (16) avec une modulation PSK de M fois et une durée de symboles $T_{sf} \approx$ 1 / $\Delta f_c$ (17) pour l'identification de phase des $N_c$ sous-porteuses (15), **caractérisée en ce que** le contrôle comparatif du niveau du signal de réception (5) favorable dans le sens de la diversité est réalisé sur toute la largeur du canal HF B = $N_c$ x $\Delta f_c$ (19) de toutes les $N_c$ sous-porteuses et la durée de contrôle du niveau $T_p$ (11) est fixée à environ 1/B = 1/($\Delta f_c$ x $N_c$) et, de ce fait, est par approximation du nombre $N_c$ des sous-porteuses existantes (15), plus petite que la durée des symboles FDM $T_{sf}$ 1/$\Delta f_c$ (17), de sorte que pour R signaux de réception (5) successifs à vérifier pendant un cycle d'essai, seule la part de temps (R/$N_c$) x $T_{sf}$ non significative pour l'identification des symboles est utilisée pour le contrôle du niveau et l'ensemble du cycle de contrôle est de préférence lancé au début ou à la fin de la durée des symboles FDM $T_{sf}$ du flux de données, et de préférence dans chaque durée de symboles FDM.

4. Installation de réception selon la revendication 2 pour des signaux radio à modulation numérique à une seule porteuse à haute fréquence selon le procédé M-PSK, avec des symboles envoyés successivement et ayant une durée de symbole QPSK $T_{sp} \approx$ 1/B dans la plage de fréquences supérieure à 1 GHz, **caractérisée en ce que** dans le dispositif de contrôle du niveau de réception (25), la durée du contrôle de niveau $T_p$ (11) est posée sensiblement égale à la durée de symbole QPSK $T_{sp} \approx$ 1/B et le signal de commutation (23) du dispositif de contrôle du niveau de réception (25) est transmis au dispositif de commutation logique (2) qui définit, de manière synchronisée avec le débit de symboles (18) généré dans le récepteur (3), un signal de réception aussi favorable que possible, par plusieurs niveaux de contrôle comparatifs exécutés de préférence pendant la réception de symboles successifs dans un comparateur de niveau (10) pour l'identification des symboles restants d'un groupe de $N_z$ symboles associé à un intervalle de cycle de contrôle $T_z$ (8).

**5.** Installation de réception selon la revendication 3 avec signaux radio COFDM à une fréquence de 2,3 GHz environ et $N_c$ = 1000 sous-porteuses (15) dans l'intervalle de fréquence $\Delta f_c$ = 4 kHz (16) avec une modulation 4PSK et la durée de symboles $T_{sf} \approx 1/\Delta f_c$ = 250 $\mu$sec (17) par rapport à l'identification parallèle de phase des $N_c$ = 1000 sous-porteuses (15), **caractérisée en ce que** le contrôle comparatif du niveau du signal de réception (5) favorable dans le sens de la diversité est réalisé sur toute la largeur du canal HF B = $N_c$ x $\Delta f_c$ = 4 MHz (19) de toutes les $N_c$ = 1000 sous-porteuses et la durée de contrôle du niveau $T_p$ (11) est fixée à environ 1/B = 1/($\Delta f_c$ x $N_c$) = 0,25 $\mu$sec et est ainsi, par approximation du nombre $N_c$ = 1000 des sous-porteuses existantes (15), plus petite que la durée des symboles FDM $T_{sf} \approx 1/\Delta f_c$ = 250 $\mu$sec (17), de sorte que jusqu'à R = 10 diagrammes directionnels sectoriels (9) à vérifier pendant un cycle d'essai, le temps disponible pour l'identification des symboles n'est réduit que de la part de temps techniquement négligeable de (R/$N_c$) x $T_{sf}$ = 2,5 $\mu$sec ou, avec les durées de commutation (24), d'environ 3 $\mu$sec et, sur la base d'une durée de symboles FDM $T_{sf} \approx 1/\Delta f_c$ = 250 $\mu$sec, à une vitesse de circulation de 100 km/h, il y a un cycle de contrôle complet par distance $\lambda$/20 parcourue pour le choix d'un signal de réception (5) favorable.

**6.** Installation de réception selon la revendication 4 pour la réception de signaux radio selon le procédé QPSK avec une porteuse à haute fréquence à 2,3 GHz environ pour l'identification de phase successives de symboles émis ayant une durée de symboles $T_{sp} \approx 1 / B$, **caractérisée en ce que** le contrôle comparatif du niveau du signal de réception (5) favorable dans le sens de la diversité est réalisé sur toute la largeur du canal HF B $\approx 1/T_{sp}$ = 4 MHz (19) et la durée du contrôle du niveau $T_p$ (11) est d'environ 1/B $\approx T_{sp} \approx$ 0,25 $\mu$s et l'intervalle de temps entre les cycles d'essai $T_z$ avec $N_z$ symboles correspondants est choisi de telle sorte que $T_z \approx$ 250 $\mu$sec $\approx$ 1000 durées de symboles $T_{sp}$, de sorte qu'après au maximum environ R = 10 signaux de réception (5) successifs à contrôler en comparant simultanément avec l'identification des symboles, un signal de réception (5) est réglé pour l'identification optimale des symboles pour la réception des quelque $N_z$ - R $\approx$ 990 symboles restants faisant partie d'un groupe de symboles.

**7.** Installation de réception selon les revendications 1 à 6 pour l'amélioration de la sûreté de transmission de la réception simultanée et coordonnée de signaux de radio par satellite à modulation numérique selon le procédé M-PSK et de signaux radio à modulation numérique émis par des antennes terrestres selon le procédé COFDM dans des bandes de haute fréquence voisines de la même largeur de canal HF B ayant un signal de même contenu mais décalé du temps de transmission avec un récepteur possédant des branches de réception séparées pour les deux services radio selon le principe de superposition et des signaux de fréquence intermédiaire disponibles séparément, **caractérisée en ce que** pour chaque branche de réception, il est prévu un dispositif de contrôle du niveau de réception (25a, 25b) auquel est amené le débit de symboles (18a, 18b) du service radio correspondant et il est prévu dans l'installation d'antenne (1) pour les deux services de radio un dispositif de commutation logique contrôlable (2a, 2b) et un point de connexion d'antenne (21a, 21b) et des quantités de données de contenu égal sont transmises dans le récepteur, pendant une durée de symbole FDM $T_{sf}$ du signal COFDM provenant de la transmission de données en parallèle sur le canal radio terrestre et pendant une durée de groupe de symboles $T_{sg}$ de même longueur du signal M-PSK provenant de la transmission de données en série par le canal de radio par satellite, et réunies dans le récepteur pour donner un message et les intervalles de cycle de contrôle $T_z$ sont posés égaux à la durée de symbole FDM $T_{sf}$ du signal COFDM dans la branche de réception terrestre et égaux à la durée de groupe de symboles $T_{sg}$ du signal M-PSK dans la branche de réception par satellite, de telle sorte qu'un signal de réception (5) favorable dans le sens d'une duversité, soit sélectionné séparément pour chaque service radio.

**8.** Installation de réception selon les revendications 1 à 7 pour la réception simultanée et coordonnée, en vue d'une plus grande sûreté de transmission, de signaux de radio par satellite à modulation numérique d'un premier satellite selon le procédé M-PSK et de signaux de radio par satellite à modulation numérique d'un second satellite selon le procédé M-PSK et de signaux de radio à modulation numérique selon le procédé COFDM émis par des antennes radio terrestres dans des bandes de haute fréquence voisines de la même largeur de bande de canal HF B ayant le même contenu de signal mais décalé des temps de transmission avec des branches de réception séparées pour les trois services radio selon le principe de superposition et des signaux de fréquence intermédiaire disponibles séparément, **caractérisée en ce qu'**il est prévu pour chaque branche de réception un dispositif de contrôle du niveau de réception (25a, 25a', 25b) auquel est amené le débit de symboles (18a, 18a', 18b) du service radio correspondant et il est prévu dans l'installation d'antenne (1) pour les trois services de radio un dispositif de commutation logique contrôlable (2a, 2a', 2b) et un point de connexion d'antenne (21a, 21a', 21b) et des quantités de données de contenu égal sont transmises dans le récepteur, pendant une durée de symbole FDM $T_{sf}$ du signal COFDM provenant de la transmission de données en parallèle sur le canal radio terrestre et pendant une durée de groupe de symboles $T_{sg}$ de même longueur du signal M-PSK provenant de la transmission de données en série par le canal de radio par satellite, et réunies dans le récepteur pour donner un message et les intervalles de cycle de contrôle $T_z$ sont posés égaux à la durée de symbole FDM $T_{sf}$ du signal COFDM dans la branche de réception terrestre et égaux à la durée de groupe de symboles $T_{sg}$ du signal M-PSK dans la branche de réception par satellite, de telle sorte que des signaux de réception favorable (5) soient sélectionnés séparément pour chaque service radio.

9. Installation de réception selon les revendications 1 à 8, **caractérisée en ce qu'**il est prévu dans le récepteur (3) au niveau de fréquence intermédiaire un filtre passe-bande (26) adapté au ou à chaque convertisseur de fréquence et ayant une bande passante ZF en fréquence intermédiaire égale à la largeur de bande de canal HF B, dont le signal de sortie est transmis pour la détermination de la puissance de réception totale dans cette bande à un indicateur de niveau de réception (36) qui indique le niveau de réception (30).

10. Installation de réception pour la réception de signaux COFDM selon les revendications 3, 5, 7 et 8, **caractérisée en ce qu'**il est prévu un dispositif de contrôle du niveau d'entrée (25) auquel sont transmis aussi bien le niveau d'entrée (30) qu'un signal de débit de symboles (18) généré dans le récepteur et il est prévu dans le dispositif de contrôle du niveau d'entrée (25) un générateur d'impulsions (31) déclenchable qui est déclenché par le signal de débit de symboles (18) et qui délivre, selon le nombre R de signaux de réception (5) à contrôler, une séquence d'impulsions adéquate, dont l'intervalle d'impulsions se compose des temps de contrôle du niveau (11) additionnés aux temps de commutation (24) et la séquence d'impulsions en question est transmise aussi bien au comparateur de niveau (10) qu'au dispositif logique de commutation (2) pour l'activation successive ou adressée des signaux de réception (5) favorables dans le sens d'une diversité.

11. Installation de réception selon l'une ou l'ensemble des revendications 1 à 10, **caractérisée en ce qu'**en vue de sélectionner un signal de réception (5) suffisamment fort pour l'identification des bits émis pendant une durée de symbole FDM $T_{sf}$ (17) pour les signaux COFDM ou pour l'identification des bits émis pendant une durée de groupe de symboles $T_{sg}$ (12) pour les signaux M-PSK, il est prévu dans le dispositif de contrôle du niveau d'entrée (25) une commande d'exécution (32), un générateur de cadence pour la commutation des antennes (33) selon un intervalle de cadence $\approx 1/B$, un commutateur d'antennes (34) pouvant être adressé en séquence, un indicateur de seuil de niveau (6) et un comparateur de niveau (10) et le commutateur d'antennes (34) pouvant être adressé en séquence est commuté jusqu'à ce que le niveau de réception (30) atteigne au moins le niveau prédéterminé par l'indicateur de seuil de niveau (6).

12. Installation de réception selon l'une ou l'ensemble des revendications 3, 5, 7, 8 et 10, **caractérisée en ce qu'**en vue de la sélection du signal de réception (5) le plus fort pour l'identification des $N_c$ x ld(M) bits émis pendant une durée de symbole FDM $T_{sf}$ (17), il est prévu dans le dispositif de contrôle du niveau d'entrée (25) une commande d'exécution (32), un générateur de cadence pour la commutation des antennes (33), un commutateur d'antennes (34) pouvant être adressé en séquence, une mémoire adressable (35) et un comparateur de niveau (10).

13. Installation de réception selon les revendications 1 à 12, **caractérisée en ce que** le dispositif de contrôle du niveau d'entrée (25) est prévu dans le récepteur (3) et les signaux de commutation (23) sont transmis au dispositif logique contrôlable de commutation (2) de la disposition d'antennes (20).

14. Installation de réception selon les revendications 1 à 12, **caractérisée en ce que** le dispositif de contrôle du niveau d'entrée (25) est disposé à l'extérieur du récepteur (3) et à proximité spatiale du dispositif logique contrôlable de commutation (2) et reçoit aussi bien le signal de débit de symboles (18) que le niveau de réception (30) sur la ligne à haute fréquence menant au récepteur (3).

15. Installation de réception selon les revendications 1 à 14, **caractérisée en ce que** les niveaux du signal de réception (5a) dérivé du signal de réception (5) et provenant du récepteur qui se produisent dans différentes positions de commutation (S1, S2...) à contrôler du dispositif logique de commutation (2) sont captés de manière comparative dans un dispositif de contrôle du niveau d'entrée (25), de telle manière que la position de commutation au niveau maximal ($S_{max}$) correspondant au signal de réception (5) le plus favorable soit réglée à la fin de la durée de contrôle du niveau (7) totale pour le reste de la durée du symbole.

16. Installation de réception selon les revendications 1 à 15, **caractérisée en ce qu'**il est prévu une première antenne individuelle (A1) avec un diagramme directionnel prescrit sur une plaque plane, dont le diagramme directionnel est déformé lors du montage du véhicule par des retraits, et une antenne individuelle (A2) ou plusieurs antennes individuelles (A2, A3, A4, A5) disposées en position décentralisée sur le véhicule délivrent des signaux de réception (5) favorables dans le sens d'une diversité, et les signaux de réception de toutes les antennes individuelles (A1, A2, A3, A4, A5) sont transmis au dispositif logique de commutation (2).

**17.** Installation de réception selon les revendications 1 à 15, **caractérisée en ce que** l'installation d'antennes (1) se compose de plusieurs antennes individuelles (A1, A2, A3, ...) et de plusieurs parties d'antennes (4a, 4b, 4c... 4g), qui forment ensemble une disposition de cadre croisée composée pour l'essentiel de deux structures de cadre, contenant des éléments réactifs (39) et des diodes de commutation (38), un diagramme directionnel (9) à polarisation circulaire, se rapprochant autant que possible du diagramme directionnel prescrit, est établi avec certaines positions de commutation discrètes disponibles (S1, S2, S3...) des diodes de commutation (38) à l'aide des éléments réactifs (39) et plusieurs diagrammes directionnels (9) sectoriels sont alternativement réglés avec d'autres positions de commutation discrètes disponibles (S1, S2, S3...) des diodes de commutation (38) pour remplir la surface enveloppante.

**18.** Installation de réception selon les revendications 1 à 15, **caractérisée en ce qu'**un renfoncement (58) en forme de cuvette rectangulaire ou circulaire, à parois (63) obliques, est formé dans la carrosserie conductrice électrique du véhicule, et **en ce que**, pour former un diagramme directionnel (9) sectoriel adapté au rayonnement à forte obliquité, une antenne patch (A1) est disposée au centre de la cuvette sur son fond de cuvette (64) et d'autres antennes patch (A2, A3, A4...) sont disposées sur les parois obliques (63) de la cuvette pour former d'autres diagrammes directionnels (9) sectoriels couvrant les zones angulaires de faible élévation.

**19.** Installation de réception selon la revendication 18 en relation avec la revendication 17, **caractérisée en ce qu'**au lieu de l'antenne patch (A1) disposée au centre de la cuvette, une antenne du type de l'antenne décrite dans la revendication 17 ayant un diagramme directionnel (9) se rapprochant autant que possible du diagramme directionnel prescrit.

**20.** Installation de réception selon les revendications 1 à 10 en relation avec les revendications 18 et 19, **caractérisée en ce que** comme dans les revendications 18 et 19, il est prévu un renfoncement en forme de cuvette (58) et il existe au centre de la cuvette, à une distance adéquate du fond (64) de la cuvette, un dipôle horizontal croisé formé par les parties d'antenne (4a, 4b) pour le rayonnement à forte obliquité à polarisation circulaire et il est prévu deux antennes groupées disposées à 90° l'une par rapport à l'autre et formées des parties d'antenne verticales (4c, 4d, 4e, 4f et 4g, 4h, 4i, 4k) ayant chacune un réseau d'interconnexion (62), qui permettent d'obtenir les diagrammes directionnels sectoriels (9) nécessaires pour couvrir le rayonnement aux angles de faible élévation dans les deux directions de leur étendue en tant qu'antennes individuelles (A2, A3 et A4, A5).

**21.** Installation de réception selon la revendication 20, **caractérisée en ce qu'**en vue d'une meilleure couverture azimutale du rayonnement aux angles de faible élévation, il est prévu une pluralité d'antennes de groupe dont les antennes individuelles (A2 à A9) se trouvent aux mêmes distances angulaires azimutales.

**22.** Installation de réception selon la revendication 19, **caractérisée en ce qu'**au lieu des antennes patch disposées sur les parois obliques (63) de la cuvette, il est prévu des antennes groupées à polarisation horizontale (A2 à A9), de telle sorte que chaque antenne groupée soit positionnée à une distance adéquate de la paroi oblique (63) de la cuvette et que les parties d'antenne (4g, 4h) ou antennes individuelles (A2) soient suffisamment nombreuses pour que l'effet d'ombre de la paroi oblique (63) de la cuvette opposée à chacune soit supprimé ou surcompensé.

**23.** Installation de réception selon la revendication 22, **caractérisée en ce que** le rayonnement aux angles de faible élévation est optimisé par le fait que les antennes groupées sont disposées dans le plan de la surface de la carrosserie à une distance d'un quart de longueur d'onde environ de la paroi oblique (63) de la cuvette et l'inclinaison des parois obliques (63) de la cuvette est optimisée.

**24.** Installation de réception selon la revendication 8, **caractérisée en ce qu'**en vue de la transmission des deux signaux de radio par satellite de la disposition d'antennes (20) vers les récepteurs satellite (3a et 3a'), il est prévu une ligne à haute fréquence commune avec bifurcation des signaux à l'entrée du récepteur (3) et il est prévu dans la disposition d'antenne (20) un seul dispositif logique de commutation (2a) pour la réception des signaux de radio par satellite et un dispositif de contrôle du niveau d'entrée (25), et le dispositif de contrôle du niveau d'entrée (25) reçoit aussi bien les deux niveaux de réception (30a, 30a') associés aux signaux de radio par satellite, pour le contrôle séparé du niveau, que les deux signaux de débit de symboles (18a, 18a') et il est prévu un circuit logique (27) à mémoire conçu de telle manière qu'à tout moment, la position prise par le dispositif logique de commutation (2a) soit celle à laquelle le nombre de signaux de satellite reçus pour une identification sûre des symboles est le plus grand.

**25.** Installation de réception selon la revendication 24, **caractérisée en ce que** le circuit logique (27) à mémoire est conçu de telle manière que si le niveau minimal pour l'identification sûre des symboles n'est pas atteint par l'un des deux signaux de radio par satellite, afin d'éviter les perturbations à la commutation dans l'autre signal de radio par satellite assez bon pour être reçu, la commutation du dispositif logique de commutation (2a) vers un autre signal d'antenne est déclenché de manière appropriée à l'aide du débit de symboles à un moment de commutation qui ne nuira sensiblement pas au signal de réception assez bon pour être reçu.

26. Installation de réception selon les revendications 24 et 25, **caractérisée en ce que** pour la transmission des deux signaux de radio par satellite aussi bien que du signal terrestre entre la disposition d'antennes (20) et les récepteurs (3a, 3a' et 3b) des signaux par satellite et du signal terrestre, il est prévu une ligne à haute fréquence commune avec bifurcation des signaux à l'entrée du récepteur (3) et la disposition d'antenne (20) comprend un seul dispositif logique de commutation (2a) pour la réception des signaux de radio par satellite aussi bien que du signal terrestre et un dispositif de contrôle du niveau d'entrée (25) et le dispositif de contrôle du niveau d'entrée (25) reçoit aussi bien les niveaux de réception (30a, 30a') associés aux signaux de radio par satellite que le niveau de réception (30b) associé aux signaux de radio terrestre, pour le contrôle séparé du niveau, que tous les signaux de débit de symboles (18a, 18a', 18b) et il est prévu un circuit logique (27) à mémoire conçu de telle manière qu'à tout moment, la position prise par le dispositif logique de commutation (2a) soit ajustée par recherche par commutation successive du dispositif logique de commutation (2a) dans la position où le nombre de signaux de satellite reçus pour une identification sûre des symboles est le plus grand.

Fig. 1a

Fig. 1b

Fig. 1c

EP 1 239 608 B1

Fig. 1d

Fig. 1e

EP 1 239 608 B1

Fig. 2

Fig. 3a

Fig. 3b

EP 1 239 608 B1

# COFDM

# M-PSK

Fig. 4a

Fig. 4c

Fig. 4b

Fig. 4d

EP 1 239 608 B1

18    30

```
┌─────────────────────┐        ┌─────────────────────┐
│  Ablaufsteuerung     │        │  adressierbarer      │
│                      │        │  Speicher für P_x    │
│                 32   │        │                 35   │
└─────────────────────┘        └─────────────────────┘

┌─────────────────────┐        ┌─────────────────────┐
│  Takterzeugung       │        │  Pegelkomparator     │
│  für Antennen-       │        │  zur Feststellung    │
│  umschaltung         │        │  von P_xmax          │
│                 33   │        │                 10   │
└─────────────────────┘        └─────────────────────┘

┌─────────────────────┐        ┌─────────────────────┐
│  sequentielle        │        │  Zuordnung der Ad-   │
│  adressierbare       │        │  resse S_max zur An- │
│  Antennenum-         │        │  tenne mit P_xmax    │
│  schaltung      34   │        │                 37   │
└─────────────────────┘        └─────────────────────┘
```

25

23

Fig. 4e

$z$

$x$

Fig. 5a

Fig. 5b

Fig. 5c

Fig. 5d

Fig. 5e

Fig. 6

Fig. 7

Fig. 8a

Fig. 8b

EP 1 239 608 B1

Fig. 9a

Fig. 9b

Fig. 10a

Fig. 10b

Fig. 11a

EP 1 239 608 B1

Differenz der von Antenne 0 und der Antenne 1 empfangenen Signale

t  in λ/100

Fig. 11b

Schaltfunktion zwischen den Antennen 0 und 1

t  in λ/100

Fig. 11c

EP 1 239 608 B1